# EUROPÄISCHE PATENTSCHRIFT

(11) **EP 2 423 933 B1**
(45) Veröffentlichungstag und Bekanntmachung des Hinweises auf die Patenterteilung: **20.04.2016**
(21) Anmeldenummer: 11178095.3
(22) Anmeldetag: 19.08.2011
(51) Int. Cl.: H01H 9/08, H01H 71/02, H01H 73/60

(54) **Leistungsschalteraufnahmemodul**
Circuit breaker holder module
Module de réception de commutateur de puissance

(30) Priorität: 30.08.2010 DE 102010039934
(43) Veröffentlichungstag der Anmeldung: 29.02.2012
(73) Patentinhaber: Siemens Aktiengesellschaft, 80333 München (DE)
(72) Erfinder: Krivanek, Libor, 56181 Kunvald v Cechách (CZ); Dostal, Ladislav, 56401 Zamberk (CZ); Jerabek, Lukas, 56401 Zamberk (CZ); Aukofer, Sebastian, 92224 Amberg (DE); Rohrwild, Christian, 93138 Lappersdorf (DE)

(56) Entgegenhaltungen:
- EP-A1- 0 227 586
- EP-A1- 0 843 332
- EP-A1- 2 031 625
- DE-C1- 10 203 700
- US-A- 4 112 269
- US-A- 6 005 208
- US-A1- 2003 141 173
- Petra Belzner ET AL: "Schalten, Schützen, Verteilen in Niederspannungsnetzen" In: "Schalten, Schützen, Verteilen in Niederspannungsnetzen", 1 January 1992 (1992-01-01), SIEMENS, Erlangen, XP055171458, ISBN: 978-3-80-094122-3 pages 262-263, * the whole document *

## Beschreibung

Die Erfindung betrifft ein Aufnahmemodul, zum Einbau in einen Schaltschrank, mit einem Primärstromkreisgegenkontaktelement, wobei das Aufnahmemodul einen Leistungsschalter, insbesondere Niederspannungsleistungsschalter, unmittelbar aufnehmen kann, so dass ein Primärstromkreiskontaktelement des Leistungsschalters unmittelbar mit dem Primärstromkreisgegenkontaktelement elektrisch leitend verbunden ist. Ferner betrifft die Erfindung ein Leistungsschaltersystem umfassend einen Leistungsschalter und ein Aufnahmemodul, zum Aufnehmen des Leistungsschalters, sowie ein Verfahren zum Koppeln eines Leistungsschalters mit einem Aufnahmemodul.

Im Bereich der industriellen Automatisierungstechnik werden Leistungsschalter und hierbei insbesondere Niederspannungsleistungsschalter über ein Aufnahmemodul in einen Schaltschrank eingebaut und letztendlich mit einem Primärstromkreis einer zu überwachenden Anlage gekoppelt. Hierbei wird zunächst ein Aufnahmemodul, umgangssprachlich auch Einschubmodul oder Einschubrahmen genannt, in einen Schaltschrank eingebaut. Das in einem Schaltschrank eingebaute Aufnahmemodul wird mit dem zu überwachenden Primärstromkreis der zu überwachenden Anlage elektrisch leitend verbunden, so dass der Primärstromkreis der zu überwachenden Anlage über Primärstromkreisgegenkontaktelemente des Aufnahmemoduls geführt wird.

Das in einem Schaltschrank eingebautes Aufnahmemodul ist somit mit dem zu überwachenden Stromkreis (vorzugsweise ein Primärstromkreis) der Anlage elektrisch leiten verbunden und bildet mit dem/den Primärstromkreisgegenkontaktelement/-en die Kontaktselle für den Lastungsschalter, so dass mittels des Leistungsschalters der Stromkreis der Anlage überwacht werden kann.

Aus Petra Belzner ET AL: "Schalten, Schützen, Verteilen in Niederspannungsnetzen" In: "Schalten, Schützen, Verteilen in Niederspannungsnetzen", 1. Januar 1992 (1992-01-01), SIEMENS, Erlangen, XP055171458, ISBN: 978-3-80-094122-3, Seiten 262-263, ist ein Einschubrahmen für ein Schaltgerät bekannt, der zwei Kontaktelemente beziehungsweise Steckverbindungen aufweist, nämlich einmal Kontaktelemente/Steckverbindungen für einen Hauptstromkreis und einmal Kontaktelemete/Steckverbindungen für einen Hilfsstromkreis. Ferner ist dort offenbart, dass der Einschubschalter im Einschubrahmen drei Positionen einnehmen kann, nämlich eine Betriebsstellung, in der die Haupt- und Hilfs-Einschubkontakte geschlossen sind, eine Prüfstellung, in der die Haupt-Einschubkontakte geöffnet und die Hilfs-Einschubkontakte geschlossen sind, und eine Trennstellung, in der Haupt- und Hilfs-Einschubkontakte geöffnet sind.

Aus der US 6,005,208 A ist ein Anschluss eines Schaltgerätes gezeigt.

Die EP 0 227 586 A1 offenbart eine elektrische Schalteinrichtung mit einem Einschubrahmen und einem darin einsetzbaren Schaltgerät.

Die DE 102 03 700 C1 offenbart eine Ausfahreinrichtung für einen Leistungsschalter. Der Leistungsschalter ist auf einem Schlitten montiert und kann in eine Grundeinheit eingesetzt und entnommen werden.

Die US 4,112,269 A offenbart eine federnde Lagerung eines Leistungsschalters an einer Montageplatte.

Aus der US 2003/0141173 A1 ist eine Verriegelungsvorrichtung für einen elektrischen Schalter, der relativ zu einem Einschubrahmen zwischen einer Trennstellung und einer Betriebsstellung bewegt werden kann.

Ein Leistungsschalter kann nun mit dem Aufnahmemodul mechanisch gekoppelt werden, so dass der zu überwachende Stromkreis von dem Leistungsschalter überwacht werden kann. Im gekoppelten Zustand des Leistungsschalters mit dem Aufnahmemodul sind die Primärstromkreiskontaktelemente des Leistungsschalters mit den Primärstromkreisgegenkontaktelementen des Aufnahmemoduls elektrisch leitend verbunden. Der Leistungsschalter stellt somit eine elektrisch leitende Verbindung zu dem zu überwachenden Stromkreis einer Anlage her. Eine zu überwachende Anlage kann beispielsweise eine elektrische Maschine sein.

Das Koppeln des Leistungsschalters mit dem Aufnahmemodul erfolgt üblicherweise mittels Stecktechnik oder Einschubtechnik. Bei der Einschubtechnik wird der Leistungsschalter üblicherweise über eine Kurbel mit dem Aufnahmemodul mechanisch gekoppelt. Bei dem mechanischen Koppeln des Leistungsschalters mit dem Aufnahmemodul ist somit zunächst das Primärstromkreiskontaktelement des Leistungsschalters nicht mit dem Primärstromkreisgegenkontaktelement des Aufnahmemoduls elektrisch leitend verbunden. Erst durch den mechanischen Koppelungsschritt wird das Primärstromkreiskontaktelement mit dem Primärstromkreisgegenkontaktelement elektrisch leitend verbunden.

Der Leistungsschalter kann eine Anschlusseinheit aufweisen, über welche ein Leistungsschalterzubehörmodul mit dem Leistungsschalter verbunden werden kann. Mittels eines derartigen Leistungsschalterzubehörmoduls können unterschiedliche Zusatzfunktionen wie z.B. Diagnosefunktionen, Überwachungsfunktionen erfolgen. Das mit einem Leistungsschalter verbunden Leistungsschalterzubehörmodul ist hierbei mittels einer Einzelverdrahtung mit einer Auswerteeinheit verbunden. Diese Auswerteeinheit kommuniziert mir dem Leistungsschalterzubehörmodul über die Einzelverdrahtung.

Es ist Aufgabe der vorliegenden Erfindung ein Koppeln eines Leistungsschalters, insbesondere Niederspannungsleistungsschalter, mit einem Aufnahmemodul zu verbessern. Hierbei soll insbesondere das Austauschen sowie Anschließen des Leistungsschalters mit dem Aufnahmemodul verbessert werden.

Erfindungsgemäß wird diese Aufgabe gelöst durch ein Aufnahmemodul gemäß Anspruch 1, d.h. durch Aufnahmemodul, zum Einbau in einen Schaltschrank, mit einem Primärstromkreisgegenkontaktelement und einem Kommunikationsgegenkontaktelement, wobei das Aufnahmemodul einen Leistungsschalter unmittelbar aufnehmen kann, so dass ein Primärstromkreiskontaktelement des Leistungsschalters unmittelbar mit dem Primärstromkreisgegenkontaktelement und ein Kommunikationskontaktelement des Leistungsschalters unmittelbar mit dem Kommunikationsgegenkontaktelement elektrisch leitend verbunden sind, wobei das Kommunikationsgegenkontaktelement gegenüber dem Primärstromkreisgegenkontaktelement derart angeordnet ist, dass in einer ersten Aufnahmeposition des Leistungsschalters in dem Aufnahmemodul das Kommunikationskontaktelement mit dem Kommunikationsgegenkontaktelement elektrische leitend verbunden ist und das Primärstromkreisgegenkontaktelement nicht mit dem Primärstromkreiskontaktelement elektrisch leitend verbunden ist und in einer zweiten Aufnahmeposition des Leistungsschalters in dem Aufnahmemodul das Primärstromkreisgegenkontaktelement mit dem Primärstromkreiskontaktelement und das Kommunikationsgegenkontaktelement mit dem Kommunikationskontaktelement elektrisch leitend verbunden sind, sowie durch ein Leistungsschaltersystem gemäß Anspruch 9, d.h. durch Leistungsschaltersystem umfassend einen Leistungsschalter und ein Aufnahmemodul, zum Aufnehmen des Leistungsschalters, wobei der Leistungsschalter ein Primärstromkreiskontaktelement und einen Kommunikationskontaktelement und das Aufnahmemodul ein Primärstromkreisgegenkontaktelement und ein Kommunikationsgegenkontaktelement umfasst, wobei das Aufnahmemodul den Leistungsschalter unmittelbar aufnehmen kann, so dass das Primärstromkreiskontaktelement unmittelbar mit dem Primärstromkreisgegenkontaktelement und das Kommunikationskontaktelement unmittelbar mit dem Kommunikationsgegenkontaktelement elektrisch leitend verbunden sind, wobei das Kommunikationskontaktelement und/oder Kommunikationsgegenkontaktelement gegenüber dem Primärstromkreiskontaktelement und/oder Primärstromkreisgegenkontaktelement derart angeordnet sind, dass in einer ersten Aufnahmeposition des Leistungsschalters in dem Aufnahmemodul das Kommunikationskontaktelement mit dem Kommunikationsgegenkontaktelement elektrische leitend verbunden ist und das Primärstromkreisgegenkontaktelement nicht mit dem Primärstromkreiskontaktelement elektrisch leitend verbunden ist und in einer zweiten Aufnahmeposition des Leistungsschalters in dem Aufnahmemodul das Primärstromkreisgegenkontaktelement mit dem Primärstromkreiskontaktelement und das Kommunikationsgegenkontaktelement mit dem Kommunikationskontaktelement elektrisch leitend verbunden sind, sowie durch ein Verfahren zum Koppeln eines Leistungsschalters mit einem Aufnahmemodul gemäß Anspruch 12, d.h. durch ein Verfahren zum Koppeln eines Leistungsschalters mit einem Aufnahmemodul, wobei der Leistungsschalter ein Primärstromkreiskontaktelement und ein Kommunikationskontaktelement und das Aufnahmemodul ein Primärstromkreisgegenkontaktelement und ein Kommunikationsgegenkontaktelement umfasst, wobei beim mechanischen Koppeln des Leistungsschalters mit dem Aufnahmemodul in einen ersten Koppelschritt des Leistungsschalters mit dem Aufnahmemodul der Leistungsschalter in dem Aufnahmemodul zunächst eine erste Aufnahmeposition einnimmt, in welcher das Kommunikationskontaktelement mit dem Kommunikationsgegenkontaktelement elektrische leitend verbunden ist und das Primärstromkreisgegenkontaktelement nicht mit dem Primärstromkreiskontaktelement elektrisch leitend verbunden ist und in einem anschließenden zweiten Koppelschritt des Leistungsschalters mit dem Aufnahmemodul der Leistungsschalter in dem Aufnahmemodul eine zweiten Aufnahmeposition einnimmt, in welcher das Primärstromkreisgegenkontaktelement mit dem Primärstromkreiskontaktelement und das Kommunikationsgegenkontaktelement mit dem Kommunikationskontaktelement elektrisch leitend verbunden ist.

Vorteilhafte Weiterbildungen der Erfindung sind in den abhängigen Ansprüchen 2 bis 8, 10 bis 11 und 13 bis 15 angegeben. Durch das erfindungsgemäße Aufnahmemodul können folglich mindestens zwei Aufnahmepositionen des Leistungsschalters in dem Aufnahmemodul eingenommen werden. In der ersten Aufnahmeposition ist das Kommunikationsgegenkontaktelement mit dem Kommunikationskontaktelement elektrisch leitend verbunden und das Primärstromkreisgegenkontaktelement ist nicht mit dem Primärstromkreiskontaktelement elektrisch leitend verbunden. In der ersten Aufnahmeposition ist vorzugsweise das Primärstromkreisgegenkontaktelement sicher galvanisch von dem Primärstromkreiskontaktelement getrennt, so dass keine elektrisch leitende Verbindung herbeigeführt werden kann.

Ein Leistungsschalterzubehörmodul, welches beispielsweise auf dem Leistungsschalter montiert ist, ist vorzugsweise durch eine im Leistungsschalter geführte Leistungsschalterkommunikationsleitung mit dem Kommunikationskontaktelement elektrisch leitend verbunden. Folglich liegt in der ersten Aufnahmeposition bereits eine elektrisch leitende Verbindung zwischen dem Kommunikationsgegenkontaktelement und dem mit dem Leistungsschalter verbundenen Leistungsschalterzubehörmodul vor. Folglich kann bereits eine Kommunikation zwischen dem Leistungsschalterzubehörmodul und dem Aufnahmemodul oder einem mit dem Aufnahmemodul verbundenen Auswertegerät erfolgen. Hierfür müssten lediglich das Kommunikationsgegenkontaktelement elektrisch leitend mit dem Auswertegerät verbunden sein. Ein von dem Leistungsschalter zu überwachender Primärstromkreis ist während der ersten Aufnahmeposition noch nicht elektrisch leitend mit den Primärstromkreiskontaktelementen des Leistungsschalters verbunden, wo hingegen ein Kommunikation mit dem Leistungsschalter und insbesondere einem Leistungsschalterzubehörmodul bereits über das Aufnahmemodul erfolgen kann. Die Auswerteeinheit, welche mit dem Kommunikationsgegenkontaktelement elektrisch leitend verbunden ist, kann somit bereits mit dem Leistungsschalter kommunizieren. Die Auswerteinheit kann hierbei innerhalb des Aufnahmemoduls aber auch dezentral zum Aufnahmemodul angeordnet sein. Folglich kann beispielsweise bereits eine Kommunikation bzw. Signalausgabe zwischen dem Leistungsschalterzubehörmodul und dem Aufnahmemodul erfolgen. Diese Kommunikation kann bidirektional oder unidirektional sein. Das Aufnahmemodul stellt somit sicher, dass innerhalb der ersten Aufnahmeposition das Primärstromkreisgegenkontaktelement nicht elektrisch leitend mit dem Primärstromkreiskontaktelement verbunden ist, wo hingegen das Kommunikationsgegenkontaktelement mit dem Kommunikationsgegenkontaktelement elektrisch verbunden ist, so dass beispielsweise für Testzwecke bereits mit dem Leistungsschalterzubehörmodul kommuniziert werden kann.

Erst durch den weiteren Koppelungsschritt des Leistungsschalters mit dem Aufnahmemodul wird die zweite Aufnahmeposition eingenommen. Bei diesem Koppelungsschritt wird der Leistungsschalter vorzugsweise weiter in Richtung des Aufnahmemoduls bewegt. In der zweiten Aufnahmeposition, welche vorzugsweise die Endlage des Leistungsschalters in dem Aufnahmemodul bildet, ist das Primärstromkreisgegenkontaktelement mit dem Primärstromkreiskontaktelement und das Kommunikationsgegenkontaktelement mit dem Kommunikationskontaktelement elektrisch leitend verbunden. Der Leistungsschalter ist somit zur Überwachung eines Primärstromkreises einer zu überwachenden Anlage ordnungsgemäß mit dem Aufnahmemodul und letztendlich hierüber mit dem Primärstromkreis der zu überwachenden Anlage gekoppelt.

Durch das erfindungsgemäße Verfahren können somit zwei Schaltstellungen sichergestellt werden. In der ersten Schaltstellung (erste Aufnahmeposition) ist bereits eine Kommunikation zwischen dem Aufnahmemodul und dem Leistungsschalter möglich, wo hingegen der Primärstromkreis der zu überwachenden Anlage sicher von dem Leistungsschalter getrennt ist. In der zweiten Schaltposition (zweite Aufnahmeposition) ist der Leitungsschalter über das Aufnahmemodul mit dem Primärstromkreis verbunden/verbindbar. Ferner liegt eine direkte Kommunikationsverbindung zwischen dem Leistungsschalter und dem Aufnahmemodul vor. Der Leistungsschalter kann somit bevor er seine endgültige Betriebsposition einnimmt, eine Zwischenlage (erste Aufnahmeposition) einnehmen, in welcher mittels des Aufnahmemoduls insbesondere mit einem Leistungsschalterzubehörmodule kommuniziert werden kann.

Ein Primärstromkreiskontaktelement und Primärstromkreisgegenkontaktelement wird vorzugsweise jeweils durch zwei Kontaktelemente (z.B. Stifte und/oder Buchse) ausgebildet.

Ein Kommunikationskontaktelement und/oder Kommunikationsgegenkontaktelement kann jeweils durch ein Kontaktelement (z.B. Kontaktstift und/oder Kontaktbuches) aber auch aus mehreren Kontaktelementen ausgebildet sein.

Vorzugsweise liegt die elektrisch leitende Verbindung zwischen dem Kommunikationskontaktelement und dem Kommunikationsgegenkontaktelement bei dem Koppelungsschritt des Leistungsschalters mit dem Aufnahmemodul von der ersten Aufnahmeposition zur zweiten Aufnahmeposition ununterbrochen vor.

Unter den Begriff unmittelbare Verbindung wird insbesondere eine direkte Verbindung zweier Elemente verstanden.

In einer vorteilhaften Ausführungsform der Erfindung sind das Kommunikationsgegenkontaktelement und das Primärstromkreisgegenkontaktelement auf einer gleichen Seitenfläche des Aufnahmemoduls angeordnet.

Hierbei ist das Kommunikationsgegenkontaktelement vorzugsweise zwischen dem Primärstromkreisgegenkontaktelement des Aufnahmemoduls angeordnet. Das Kommunikationsgegenkontaktelement ist hierbei vorzugsweise mittig zwischen dem Primärstromkreisgegenkontaktelement (welcher z.B. aus zwei Primärstromkreisgegenkontaktelementbuchsen besteht) angeordnet.

In einer weiteren vorteilhaften Ausführungsform der Erfindung umfasst das Aufnahmemodul ein Haltemittel, welches den Leistungsschalter in der ersten Aufnahmeposition und in der zweiten Aufnahmeposition mechanisch fixieren kann.

Durch das Haltemittel kann somit der Leistungsschalter ohne Zutun eines Endanwenders in dem Aufnahmemodul mechanisch fixiert werden. Der Leistungsschalter kann somit innerhalb der ersten Aufnahmeposition sicher und stabil durch das Aufnahmemodul derart mit dem Aufnahmemodul mechanisch fixiert werden, dass lediglich eine elektrische Verbindung zwischen dem Kommunikationsgegenkontaktelement und dem Kommunikationskontaktelement vorliegt und keine elektrischer Verbindung zwischen dem Primärstromkreisgegenkontaktelement und dem Primärstromkreiskontaktelement vorliegt. Ferner kann durch das Haltemittel das Aufnahmemodul in der zweiten Aufnahmeposition sicherstellen, dass sowohl das Kommunikationsgegenkontaktelement mit dem Kommunikationskontaktelement (Kommunikationszweig) als auch das Primärstromkreiskontaktelement mit dem Primärstromkreisgegenkontaktelement elektrisch leitend verbunden ist. Das Haltemittel stellt hierbei vorzugsweise eine mechanische Wirkverbindung mit einem Haltemittelgegenelement des Leistungsschalters her.

Vorzugsweise kann das Aufnahmemodul den Leistungsschalter ferner in einer dritten Aufnahmeposition mechanisch fixieren. Innerhalb dieser dritten Aufnahmeposition ist sowohl das Kommunikationsgegenkontaktelement von dem Kommunikationskontaktelement als auch das Primärstromkreisgegenkontaktelement von dem Primärstromkreiskontaktelement nicht elektrisch leitend verbunden. Bei einem mechanischen Koppeln des Leistungsschalters mit dem Aufnahmemodul würde somit zunächst die dritte Aufnahmeposition eingenommen werden, in welcher keine elektrische Kontaktierung des Primärstromkreisgegenkontaktelements und Kommunikationsgegenkontaktelements mit dem Leistungsschalter erfolgt. Durch einen anschließenden vorzunehmenden Koppelvorgang nimmt der Leistungsschalter die zweite Aufnahmeposition innerhalb des Aufnahmemoduls ein, in welcher er vorzugsweise für Testzwecke lediglich das Kommunikationskontaktelement mit dem Kommunikationsgegenkontaktelement des Aufnahmemoduls elektrisch leitend verbunden ist. In einem weiteren anschließenden Koppelschritt nimmt letztendlich der Leistungsschalter die zweite Aufnahmeposition und somit die Endlage ein, in welcher der Primärstromkreis als auch der Kommunikationszweig zwischen dem Leistungsschalter und dem Aufnahmemodul elektrisch leitend verbunden ist. Mittels des Aufnahmemoduls kann somit ein sicheres Verbinden eines Leistungsschalters mit dem Aufnahmemodul und somit ein Anschließen der Kontakte des Leistungsschalters mit den Kontakten des Aufnahmemoduls erfolgen. Durch die Zwischenlage (erste Aufnahmeposition) kann ohne bereits den Primärstromkreis zu schließen das Zubehörmodul des Leistungsschalters z.B. getestet oder parametriert werden.

In einer weiteren vorteilhaften Ausführungsform der Erfindung kann der Leistungsschalter über das Haltemittel die erste und die zweite Aufnahmeposition gezielt einnehmen.

Dadurch, dass der Leistungsschalter gezielt die erste und die zweite, und sofern vorhanden, die dritte Aufnahmeposition gezielt einnehmen kann, kann ein Endanwender gezielt die unterschiedlichen Aufnahmepositionen / Schaltstellungen anfahren. Die Anzeige der jeweiligen Schaltposition kann vorzugsweise z.B. optisch, akustisch oder auch mechanisch erfolgen. Ein Endanwender kann somit beim Koppeln des Leistungsschalters in das Aufnahmemodul die Schaltstellungen sicher und zuverlässig und somit gezielt anfahren.

In einer weiteren vorteilhaften Ausführungsform der Erfindung ist ein Teil des Kommunikationsgegenkontaktelements in orthogonale Richtung zu der Seitenfläche des Aufnahmemoduls, aus welcher das Kommunikationsgegenkontaktelement ragt, federnd gelagert.

Die federnde Lagerung ist vorzugsweise derart ausgebildet, dass der federnd gelagerte Teil des Kommunikationsgegenkontaktelements von der Seitenfläche des Aufnahmemoduls weggedrückt wird. Das federnd gelagerte Teil kann somit in Richtung der Seitenfläche des Aufnahmemoduls bewegt werden. Hierfür muss die Federkraft überwunden werden. Ein Teil des Kommunikationsgegenkontaktelements ist somit in orthogonale Richtung zur Seitenfläche des Aufnahmemoduls beweglich gelagert. In der ersten Aufnahmeposition ist vorzugsweise das federnd gelagerte Teil weiter von der Seitenfläche des Aufnahmemoduls beabstandet als in der zweiten Aufnahmeposition. In der zweiten Aufnahmeposition ist vorzugsweise die Feder im Vergleich zur ersten Aufnahmeposition stärker komprimiert. Das Kommunikationsgegenkontaktelement stellt vorzugsweise eine elektrisch leitende Verbindung von der zum Leistungsschalter gerichteten Seite des federnd gelagerten Teils bis zu der Seitenfläche des Aufnahmemoduls her. Diese elektrische Verbindung wird vorzugsweise während des Bewegens des federnd gelagerten Teils zu der Seitenfläche ununterbrochen aufrechterhalten. Dadurch, dass das Kommunikationsgegenkontaktelement ein federnd gelagertes Tel umfasst, kann eine äußerst kompakte Verschaltung des Leistungsschalters mit dem Aufnahmemodul erfolgen. Das federnd gelagerte Teil kann vorzugsweise bis zu ca. 45 mm in Richtung zu der Seitenfläche des Aufnahmemoduls bewegt werden.

In einer weiteren vorteilhaften Ausführungsform der Erfindung ist in der ersten Aufnahmeposition das federnd gelagerte Teil weiter von der Seitenfläche des Aufnahmemoduls beabstandet als in der zweiten Aufnahmeposition.

In einer weiteren vorteilhaften Ausführungsform der Erfindung ist das federnd gelagerte Teil innerhalb des Kommunikationsgegenkontaktelements gelagert.

Das federnd gelagerte Teil kann somit innerhalb des Kommunikationsgegenkontaktelements geführt werden. Durch die innere Anordnung erfolgt zudem eine Abschirmung des beweglichen/federnd gelagerten Teils vor Umwelteinflüssen wie z.B. Staub oder Schmutz.

In einer weiteren vorteilhaften Ausführungsform der Erfindung umfasst das Kommunikationsgegenkontaktelement ein innerhalb eines elektrisch schlecht leitenden Materials federnd gelagertes elektrisch leitendes Kommunikationsgegenkontaktkontaktelement, zur unmittelbaren Kontaktierung mit dem Kommunikationskontaktelement, wobei das Kommunikationsgegenkontaktkontaktelement über eine an einer Innenseite eines schlecht leitenden Materials angeordnete elektrisch leitende Kontaktschiene eine elektrisch leitende Verbindung zwischen dem Kommunikationsgegenkontaktkontaktelement und der Seitenfläche des Kommunikationsgegenkontaktelements herstellt, mit welcher das Kommunikationsgegenkontaktelement mit dem Aufnahmemodul befestigt ist.

Es wird somit vorzugsweise eine elektrisch leitende Verbindung zwischen der zum Leistungsschalter gerichteten Seite des Kommunikationsgegenkontaktelements und der gegenüberliegenden Seitenfläche des Kommunikationsgegenkontaktelements hergestellt. Das Kommunikationsgegenkontaktelement weist folglich in orthogonaler Richtung zur Seitenfläche des Aufnahmemoduls eine durchgehende elektrisch leitende Verbindung auf.

Das elektrisch schlecht leitende Material ist beispielsweise ein isolierender Kunststoff, wohingegen ein elektrisch leitendes Material z.B. Kupfer ist. Durch die räumliche Anordnung des elektrisch leitenden Materials gegenüber dem elektrisch schlecht leitenden Materials erfolgt eine Abschirmung gegenüber Störquellen, wie z.B. Schmutz. Das Kommunikationsgegenkontaktkontaktelement ist in der ersten Aufnahmeposition weiter von der Seitenfläche des Aufnahmemoduls beabstandet als in der zweiten Aufnahmeposition. Durch das federnd gelagerte Kommunikationsgegenkontaktelement kann eine Kontaktierung des Kommunikationsgegenkontaktelements mit dem Kommunikationskontaktelement des Leistungsschalters über eine räumliche Distanz sichergestellt werden. Der Leistungsschalter kann folglich weiter in Richtung der Seitenfläche des Aufnahmemoduls bewegt werden, ohne dass die elektrische Kontaktierung zwischen dem Kommunikationsgegenkontaktelement mit dem Kommunikationskontaktelement unterbrochen wird. Hierfür ist das Kommunikationsgegenkontaktkontaktelement über eine elektrisch leitende Schiene mit einer Unterseite des Kommunikationsgegenkontaktelementes vorzugsweise während des gesamten Bewegungsprozesses von der ersten Aufnahmeposition in die zweite Aufnahmeposition elektrisch leitend verbunden.

In der Erfindung besteht das Kommunikationsgegenkontaktelement aus einem elektrisch leitenden Material sowie einem elektrisch schlecht leitenden Material, wobei ein Teil des elektrisch schlecht leitenden Materials eine hülsenähnliche Form aufweist, in welcher ein Teil des elektrisch leitenden Materials angeordnet ist. Vorzugsweise erstreckt sich die hülsenähnliche Form in orthogonale Richtung zu der Seitenfläche des Aufnahmemoduls, aus welcher das Kommunikationsgegenkontaktelement ragt. Durch das elektrisch schlecht leitende Material erfolgt insbesondere eine Abschirmung des elektrisch leitenden Materials vor Umwelteinflüssen. Vorzugsweise weist das Kommunikationsgegenkontaktelement eine teleskopähnliche Form auf, so dass das Kommunikationsgegenkontaktelement unterschiedlich von der Seitenfläche des Aufnahmemodul beabstandet sein kann. Hierbei ist vorzugsweise eine Feder derart integriert, dass sofern keine mechanische Belastung an dem Kommunikationsgegenkontaktelement anliegt, eine maximale Beabstandung zur Seitenfläche eingenommen wird.

In einer weiteren vorteilhaften Ausführungsform der Erfindung ist das Primärstromkreiskontaktelement und das Primärstromkreisgegenkontaktelement und/oder das Kommunikationskontaktelement und Kommunikationsgegenkontaktelement durch mehrere Anschlüsse ausgebildet. Sofern ein Leistungsschalter mehrere Primärstromkreise oder Kommunikationszweige aufweist, so werden diese vorzugsweise jeweils durch miteinander koppelbare Primärstromkreiskontaktelemente und Primärstromkreisgegenkontaktelemente oder Kommunikationskontaktelemente und Kommunikationsgegenkontaktelemente abgebildet.

In einer weiteren vorteilhaften Ausführungsform der Erfindung umfasst das Aufnahmemodul eine Auswerteeinheitanschlussstelle, wobei die Auswerteeinheitanschlussstelle mit dem Kommunikationsgegenkontaktelement elektrisch leitend verbunden ist.

Über die Auswerteeinheitanschlussstelle kann eine Auswerteeinheit mit dem Anschlussmodul verbunden werden. Die Auswerteeinheit ist insbesondere für eine Kommunikation mit einem Leistungsschalterzubehörmodul ausgebildet. Die Auswerteeinheitanschlussstelle ist vorzugsweise an einer Außenseite des Aufnahmemoduls angeordnet, so dass im gekoppelten Zustand mit einem Leistungsschalter (innerhalb der ersten Aufnahmeposition oder der zweiten Aufnahmeposition) eine Kommunikation mit einem mit dem Leistungsschalter verbundenen Leistungsschalterzubehörmodul über die Auswerteeinheitanschlussstelle erfolgen kann. Bei vorliegen der ersten sowie der zweiten Aufnahmeposition liegt folglich eine elektrisch leitende Verbindung zwischen der Auswerteeinheitanschlussstelle und einer für einen Leistungsschalterzubehörmodul vorgesehene Anschlusseinheit des Leistungsschalters vor. Eine separate Verkabelung des Leistungsschalterzubehörmoduls mit einer Auswerteinheit ist somit nicht notwendig.

Ebenso ist es denkbar, dass die Auswerteeinheit bereits in dem Aufnahmemodul integriert ist, so dass hierüber eine Kommunikation mit dem Leistungsschalterzubehörmodul erfolgen kann.

Durch das erfindungsgemäße Koppelverfahren kann insbesondere ein sicheres Verbinden eines Leistungsschalters mit dem Aufnahmemodul bereitgestellt werden, bei welchem ein geordnetes Verbinden des Leistungsschalters mit dem Aufnahmemodul erfolgen kann. Hierbei kann insbesondere eine Zwischenstellung (erste Aufnahmeposition) eingenommen werden, welche es ermöglicht, dass zum einen sichergestellt wird, dass der Primärstromkreis noch nicht geschlossen ist, und dennoch bereits eine Kommunikation zwischen dem Leistungsschalter und dem Aufnahmemodul erfolgen kann (z.B. für Testzwecke eines Leistungsschalterzubehörmoduls). Dies stellt eine enorme Verbesserung des Koppelungsvorganges eines Leistungsschalters mit einem Aufnahmemodul dar. Ferner entfällt durch die automatische Verbindung des Kommunikationszweiges eine ansonsten übliche aufwendige Einzelverdrahtung zwischen dem Leistungsschalter bzw. dem/den Leistungsschalterzubehörmodul/-en und dem Schaltschrank. Insbesondere bei einem Austausch des Leistungsschalters, muss lediglich der Leistungsschalter aus dem Aufnahmemodul entnommen werden und ein neuer Leistungsschalter mit dem Aufnahmemodul gekoppelt werden. Eine zusätzliche Verdrahtung des Kommunikationszweiges mit weiteren Komponenten des Schaltschranks kann vollständig entfallen, da der Kommunikationszweig des Leistungsschalters (das Kommunikationskontaktelement) ebenso über das Aufnahmemodul (mittels des Kommunikationsgegenkontaktelements) mit dem Schaltschrank verbunden ist. Ein Austauschen des Leistungsschalters wird somit enorm vereinfacht. Ebenso können Verkabelungsfehler durch die automatische Verbindung des Primärstromkreises und des Kommunikationszweiges mit dem Aufnahmemodul vermieden werden. Ferner wird sichergestellt, dass durch das federnd gelagerte Kommunikationsgegenkontaktelement keine Beschädigung des Kommunikationsgegenkontaktelements beim Koppelvorgang herbeigeführt wird, da das beweglich gelagerte Kontaktelement in das Kommunikationsgegenkontaktelement "eintaucht".

Bei einem erfindungsgemäßen Leistungsschaltersystem ist das Kommunikationskontaktelement und das Primärstromkreiskontaktelement derart gegenüber dem Kommunikationsgegenkontaktelement und dem Primärstromkreisgegenkontaktelement ausgebildet, dass bei einem Koppeln des Leistungsschalters mit dem Aufnahmemodul zunächst eine elektrisch leitende Verbindung zwischen dem Kommunikationskontaktelement und dem Kommunikationsgegenkontaktelement hergestellt wird (erste Aufnahmeposition) und erste in einem zweiten nachgeschalteten Koppelvorgang der Primärstromkreiskontakt mit den Primärstromkreisgegenkontakt elektrisch verbunden wird (zweite Aufnahmeposition).

In einer weiteren vorteilhaften Ausführungsform der Erfindung umfasst der Leistungsschalter eine Anschlusseinheit zum elektrischen Anschließen eines Leistungsschalterzubehörmoduls, wobei zumindest ein Teil der Anschlusseinheit mit dem Kommunikationskontaktelement elektrisch leitend verbunden ist.

Die elektrisch leitende Verbindung zwischen dem Kommunikationskontaktelement und dem Teil der Anschlusseinheit erfolgt vorzugsweise über eine innerhalb des Leistungsschalters angeordnete Leistungsschalterkommunikationsleitung. Auf diese Weise kann eine separate Verkabelung eines Leistungsschalterzubehörmoduls entfallen.

In einer weiteren vorteilhaften Ausführungsform der Erfindung ist in der ersten Aufnahmeposition das Primärstromkreisgegenkontaktelement sicher von dem Primärstromkreiskontaktelement beabstandet, so dass vorzugsweise das Primärstromkreiskontaktelement auch bei einer anliegenden Spannung am Primärstromkreisgegenkontaktelement galvanisch von dem Primärstromkreisgegenkontaktelement getrennt ist.

Vorzugsweise ist ab dem ersten Koppelschritt bis einschließlich zum zweiten Koppelschritt die elektrisch leitende Verbindung zwischen dem Kommunikationskontaktelement und dem Kommunikationsgegenkontaktelement hergestellt.

Im Folgenden werden die Erfindung und Ausgestaltungen der Erfindung anhand der in den Figuren dargestellten Ausführungsbeispiele näher beschrieben und erläutert. Es zeigen:
- FIG 1: einen schematischen Aufbau eines Leistungsschaltersystems im ungekoppelten Zustand,
- FIG 2: das Leistungsschaltersystem aus FIG 1, wobei das Aufnahmemodul den Leistungsschalter in der ersten Aufnahmeposition aufgenommen hat,
- FIG 3: das Leistungsschaltersystem aus FIG 1 und FIG 2, wobei das Aufnahmemodul den Leistungsschalter in der zweiten Aufnahmeposition aufgenommen hat,
- FIG 4: eine perspektivische Darstellung eines Leistungsschalters,
- FIG 5: eine perspektivische Ansicht der Unterseite des in FIG 4 gezeigten Leistungsschalters,
- FIG 6: eine perspektivische Ansicht eines Aufnahmemoduls, welches zur Aufnahme eines Leistungsschalters ausgebildet ist,
- FIG 7a, 7b: eine Anordnung des Kommunikationskontaktelements gegenüber dem Kommunikationsgegenkontaktelement in der ersten Schaltposition,
- FIG 8a, 8b: eine Anordnung des Kommunikationskontaktelements gegenüber dem Kommunikationsgegenkontaktelement in der ersten Aufnahmeposition des Leistungsschalters in dem Aufnahmemodul,
- FIG 9: eine Anordnung des Kommunikationskontaktelements gegenüber dem Kommunikationsgegenkontaktelement, in der zweiten Aufnahmeposition des Leistungsschalters in dem Aufnahmemodul, und
- FIG 10: eine perspektivische Darstellung eines Ausschnitts eines Leistungsschalters gegenüber einem Ausschnitt eines Aufnahmemoduls in der ersten Aufnahmeposition.

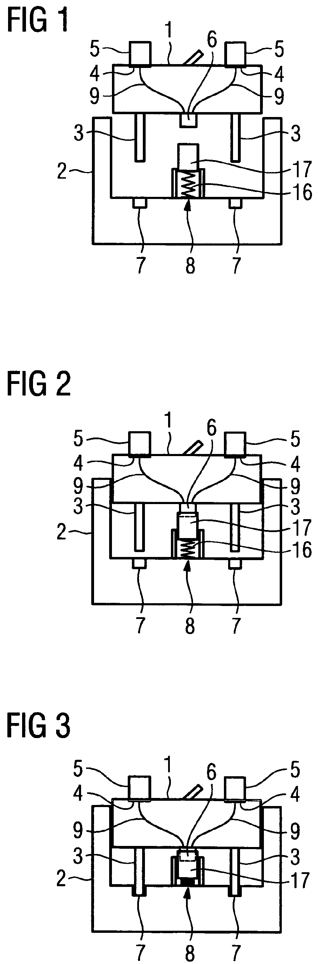

FIG 1 zeigt einen schematischen Aufbau eines Leistungsschaltersystems im ungekoppelten Zustand. Hierbei ist ein Leistungsschalter 1 sowie ein Aufnahmemodul 2 zu sehen. Dieser Leistungsschalter 1, insbesondere Niederspannungsleistungsschalter, ist für den Einsatz innerhalb der industriellen Automatisierungstechnik vorgesehen. Mit diesem Leistungsschalter 1 kann eine Versorgungsleitung (ein Primärstromkreis) einer Anlage überwacht werden. Hierfür muss der Leistungsschalter 1 mit der zu überwachenden Versorgungsleitung der Anlage gekoppelt werden. Das Anbinden des Leistungsschalters 1 mit der zu überwachenden Versorgungsleitung erfolgt hierbei vorzugsweise in einem Schaltschrank.

Der Leistungsschalter 1 kann vorzugsweise nicht nur Betriebsströme und geringe Überströme schalten, sondern auch bei Fehlern hohe Überströme und Kurzschlussströme einschalten, diese Fehlerströme eine vorgegebene Zeit halten und wieder ausschalten. Je nach Ausführung kann ein derartiger Leistungsschalter 1 einpolig oder dreipolig geschaltet werden. Der zu überwachende Stromkreis/Primärstromkreis in der Anlage wird mittels eines Primärstromkreiskontaktelements 3 des Leistungsschalters 1 überwacht. Das Primärstromkreiskontaktelement 3 besteht hierbei aus zwei Kontaktelementen, so dass der zu überwachende Stromkreis durch den Leistungsschalter 1 geführt werden kann.

Damit der Leistungsschalter 1 den Stromkreis/Primärstromkreis einer elektrischen Anlage überwachen kann, muss das Primärstromkreiskontaktelement 3 des Leistungsschalters 1 mit dem Primärstromkreis /der Versorgungsleitung) der zu überwachenden Anlage elektrisch leitend verbunden werden. Um ein Koppeln des Leistungsschalters 1 und insbesondere des Primärstromkreiskontaktelements 3 mit dem Primärstromkreis der elektrischen Anlage zu vereinfachen, ist in einem Schaltschrank ein Aufnahmemodul 2 eingebaut. Dieses Aufnahmemodul 2 ist mit der Versorgungsleitung (Leitung des Primärstromkreises) der zu überwachenden elektrischen Anlage derart elektrisch leitend verbunden, dass über ein Primärstromkreisgegenkontaktelement 7 des Aufnahmemoduls 2 der Leistungsschalter 1 mit dem Primärstromkreis der zu überwachenden Anlage elektrisch leitend verbunden werden kann. Das Primärstromkreiskontaktelement 7 besteht hierbei aus zwei Kontaktelementen, so dass der zu überwachende Stromkreis durch das Aufnahmemodul geführt werden kann. In einem Schaltschrank ist somit zunächst ein Aufnahmemodul 2 verbaut. Dieses Aufnahmemodul 2 weist Primärstromkreisgegenkontaktelemente 7 auf, welche einen Zugang zum Primärstromkreis der zu überwachenden elektrischen Anlage ermöglicht. Der Leistungsschalter 1 kann somit mittels Stecktechnik oder Einschubtechnik mit dem Aufnahmemodul 2 direkt gekoppelt werden, so dass durch ein unmittelbares Kontaktieren des Primärstromkreiskontaktelementes 3 mit dem zugehörigen Primärstromkreisgegenkontaktelement 7 der über den Primärstromkreis fließende Strom einer Anlage durch den Leistungsschalter 1 fließen und somit überwacht werden kann. Bei einem Verbinden des Leistungsschalters 1 mit dem Aufnahmemodul 2 mittels Stecktechnik wird der Leistungsschalter 1 lediglich auf das Aufnahmemodul 2 gesteckt. Ebenso kann der Leistungsschalter 1 mittels einer Einschubtechnik mit dem Aufnahmemodul 2 gekoppelt werden. Hierfür wird der Leistungsschalter 1 beispielsweise mittels einer Kurbel des Aufnahmemoduls 2 mit dem Aufnahmemodul 2 mechanisch verbunden, so dass letztendlich eine unmittelbare Kontaktierung des Primärstromkreiskontaktelements 3 des Leistungsschalters 1 mit dem Primärstromkreisgegenkontaktelement 7 herbeigeführt wird.

Um eine weiterführende Analyse bzw. Auswertung des Leistungsschalters 1 zu ermöglichen, weist der Leistungsschalter 1 eine Anschlusseinheit 4 auf. Im vorliegenden Fall weist der Leistungsschalter 1 zwei Anschlusseinheiten 4 auf. Über diese Anschlusseinheiten 4 ist ein Leistungsschalterzubehörmodul 5 unmittelbar mit dem Leistungsschalter 1 koppelbar. Ferner weist der Leistungsschalter 1 ein Kommunikationskontaktelement 6 auf. Dieses Kommunikationskontaktelement 6 befindet sich auf der gleichen Seitenfläche des Leistungsschalters 1, wie das Primärstromkreiskontaktelement 3. Das Kommunikationskontaktelement 6 ist über eine innerhalb des Leistungsschalters 1 geführten Leistungsschalterkommunikationsleitung 9 mit der Anschlusseinheit 4 elektrisch leitend verbunden. Über die Leistungsschalterzubehörmodule 5 kann letztendlich eine weiterführende Analyse des Leistungsschalters 1 erfolgen.

Durch eine Kontaktierung des Leistungsschalters 1 über das Primärstromkreiskontaktelement 3 und das Kommunikationskontaktelement 6 kann somit ein vollständiger Anschluss mit dem Leistungsschalters 1 erfolgen, so dass keine weitere Verkabelung notwendig ist. Für eine derartige Kontaktierung ist das Aufnahmemodul 2 vorgesehen. Das Aufnahmemodul 2, welches sich in einem Schaltschrank befindet, weist hierfür das Primärstromkreisgegenkontaktelement 7 sowie ein Kommunikationsgegenkontaktelement 8 auf. Das Kommunikationsgegenkontaktelement 8 befindet sich auf der gleichen Seitenfläche des Aufnahmemoduls 2 wie dessen Primärstromkreisgegenkontaktelement 7. Das Kommunikationsgegenkontaktelement 8 ist in orthogonaler Richtung zur Seitenfläche, aus welcher das Kommunikationsgegenkontaktelement 8 ragt, beweglich gelagert. Hierfür ist ein Teil des Kommunikationsgegenkontaktelementes 8 in diesem Ausführungsbeispiel mittels einer Feder 16 orthogonal zur Seitenfläche des Aufnahmemoduls 2 gelagert. In der Maximalstellung (unbelasteter Zustand) des Kommunikationsgegenkontaktelementes 8 ist die zum Kontakt mit dem Kommunikationskontaktelement 6 vorgesehene Stelle des Kommunikationskontaktelementes 8 weiter von der Seitenfläche des Aufnahmemoduls 2 beabstandet als in dem Zustand, in welchem der Leistungsschalter 1 mit seinen Primärstromkreiskontaktelementen 3 die Primärstromkreisgegenkontaktelemente 7 unmittelbar elektrisch leitend kontaktiert.

In FIG 1 ist ein ungekoppelter Zustand des Leistungsschalters 1 mit dem Aufnahmemodul 2 abgebildet. Hierbei ist weder das Primärstromkreiskontaktelement 3 mit dem Primärstromkreisgegenkontaktelement 7 noch das Kommunikationskontaktelement 6 mit dem Kommunikationsgegenkontaktelement 8 elektrisch leitend verbunden.

Über das Aufnahmemodul 2 ist das Primärstromkreisgegenkontaktelement 7 mit dem Primärstromkreis (Stromkreis) einer zu überwachenden Anlage elektrisch leitend verbunden. Ebenso ist das Kommunikationsgegenkontaktelement 7 elektrisch leitend mit einer Auswerteeinheit verbunden. Über diese Auswerteeinheit können letztendlich die mit dem Leistungsschalter 1 verbundenen Leistungsschalterzubehörmodule 5 ausgewertet werden. Die Auswerteeinheit kann sich unmittelbar innerhalb des Aufnahmemoduls 2 befinden aber auch außerhalb des Aufnahmemoduls 2 elektrisch leitend mit dem Aufnahmemodul 2 und insbesondere mit dem Kommunikationsgegenkontaktelement 8 verbunden sein.

FIG 2 zeigt das Leistungsschaltersystem aus FIG 1, wobei das Aufnahmemodul 2 den Leistungsschalter 1 in der ersten Aufnahmeposition aufgenommen hat. Es ist ersichtlich, dass das Kommunikationskontaktelement 6 des Leistungsschalters 1 das Kommunikationsgegenkontaktelement 8 des Aufnahmemoduls 2 kontaktiert. Das Primärstromkreiskontaktelement 3 ist hingegen sicher beabstandet von dem Primärstromkreisgegenkontaktelement 7, so dass keine elektrisch leitende Verbindung vorliegt. In dieser ersten Aufnahmeposition liegt somit bereits eine elektrisch leitende Kontaktierung zwischen den Leistungsschalterzubehörmodulen 5 und dem Aufnahmemodul 2 vor. Über die elektrisch leitende Verbindung zwischen dem Aufnahmemodul 2 und dem Leistungsschalterzubehörmodul 5 kann somit eine Kommunikation und/oder Energieversorgung der Leistungsschalterzubehörmodule 5 erfolgen. Eine Auswerteeinheit, welche in dem Aufnahmemodul 2 integriert ist oder mit dem Aufnahmemodul 2 verbunden ist, kann somit bereits in der ersten Aufnahmeposition mit den Leistungsschalterzubehörmodulen 5 kommunizieren, ohne das bereits der zu überwachende Primärstromkreis mit dem Leistungsschaltermodul 1 verbunden werden muss. Die Primärstromkreiskontaktelemente 3 sind hierbei derart von den Primärstromkreisgegenkontaktelementen 7 beabstandet, dass eine sichere galvanische Trennung zwischen dem Primärstromkreiskontaktelement 3 zu seinem gegenüberliegenden Primärstromkreisgegenkontaktelement 7 vorliegt.

Wird nun der Leistungsschalter 1 weiter in Richtung zu dem Aufnahmemodul 2 bewegt bzw. gekurbelt so wird ein Teil 17 des Kommunikationsgegenkontaktelementes 8 in das Kommunikationsgegenkontaktelement 8 geschoben. Dieses beweglich gelagerte Teil 17 ist über eine Feder innerhalb des Kommunikationsgegenkontaktelementes 8 federnd gelagert. Dadurch, dass der Leistungsschalter 1 weiter in Richtung des Aufnahmemoduls 2 bewegt wird, wird die Feder 16 gestaucht und der federnd gelagerte Teil 17 wird in Richtung der Seitenfläche des Kommunikationsgegenkontaktelements 8 bewegt, aus welcher das Kommunikationsgegenkontaktelement 8 aus dem Aufnahmemodul 2 ragt. Durch die federnde Lagerung kann eine mechanische Beschädigung des Kommunikationsgegenkontaktelements 8 vermieden werden.

Während der gesamten Einschubphase des beweglich gelagerten Teils 17 liegt eine elektrische leitende Verbindung zwischen dem Kommunikationskontaktelement 6 und dem Aufnahmemodul 2 vor. Der Leistungsschalter 1 wird soweit in das Aufnahmemodul 2 bewegt, bis letztendlich ein sicherer Kontakt zwischen dem Primärstromkreiskontaktelement 3 und dem Primärstromkreisgegenkontaktelement 7 vorliegt. Dieser Zustand wird durch FIG 3 veranschaulicht.

FIG 3 zeigt das Leistungsschaltersystem aus FIG 1 und FIG 2, wobei das Aufnahmemodul 2 den Leistungsschalter 1 in der zweiten Aufnahmeposition aufgenommen hat. Es ist ersichtlich, dass sowohl eine elektrisch leitende Verbindung zwischen dem Primärstromkreiskontaktelementen 3 und dem Primärstromkreisgegenkontaktelementen 7 als auch zwischen dem Kommunikationskontaktelement 6 und dem Kommunikationsgegenkontaktelement 8 vorliegt. Der Leistungsschalter 1 befindet sich somit in einer endgültigen Einbauposition innerhalb des Aufnahmemoduls 2. Innerhalb dieser Endstellung (zweite Aufnahmeposition) erfolgt der ordnungsgemäße Betrieb des Leistungsschalters 1, so dass eine Überwachung eines Stroms einer mit dem Leistungsschalter 1 verbundenen Anlage durch den Leistungsschalter 1 erfolgen kann. Die Leistungsschalterzubehörmodule 5 sind mit den jeweiligen Anschlusseinheiten 4 elektrisch leitend verbunden. Diese Anschlusseinheiten 4 sind über eine Leistungsschalterkommunikationsleitung 9 elektrisch leitend mit einem Kommunikationskontaktelement 6 elektrisch leitend verbunden. Dieses Kommunikationskontaktelement 6 ist über ein Kommunikationsgegenkontaktelement 8 mit dem Aufnahmemodul 2 wiederum elektrisch leitend verbunden, so dass das Aufnahmemodul 2 mit den Leistungsschalterzubehörmodulen 5 über die vorliegende elektrisch leitende Verbindung kommunizieren kann. Ferner kann eine Energieversorgung der Leistungsschalterzubehörmodule 5 über die vorliegende elektrisch leitende Verbindung erfolgen. Der Leistungsschalter 1 kann somit außerhalb eines Schaltschranks aufbereitet werden, d.h. mit Leistungsschalterzubehörmodulen 5 versehen werden, und muss lediglich mit einem Aufnahmemodul 2 gekoppelt werden. Hierbei kann für Testzwecke der Leistungsschalter 1 in einer ersten Aufnahmeposition derart mit dem Aufnahmemodul 2 verbunden werden, dass lediglich eine Verbindung zwischen den Kommunikationskontaktelementen 6 und dem Kommunikationsgegenkontaktelement 8 vorliegt, so dass bereits eine Kommunikation zwischen dem Aufnahmemodul 2 und den Leistungsschalterzubehörmodulen 5 erfolgen kann. Erst in einem weiteren Koppelschritt erfolgt die elektrisch leitende Verbindung des zu überwachenden Primärstromkreises mit dem Leistungsschalter 1. Durch den Schrittweisen Koppelvorgang des Leistungsschalters 1 mit dem Aufnahmemodul 2 kann ein ordnungsgemäßes und sicheres Anschließen des Leistungsschalters 1 mit dem Aufnahmemodul 2 gewährleistet werden. Dadurch, dass das Kommunikationsgegenkontaktelement 8 ein beweglich gelagertes Teil aufweist, kann insbesondere eine platzsparende und sichere Kontaktierung mit dem entsprechenden Kommunikationskontaktelement 6 hergestellt werden.

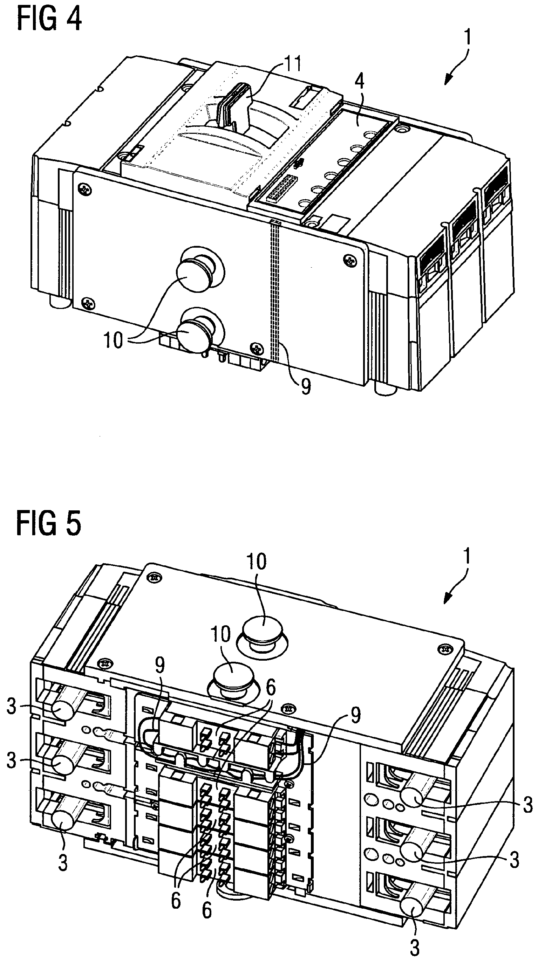

FIG 4 zeigt eine perspektivische Darstellung eines Leistungsschalters 1. Hierbei ist ersichtlich, dass der Leistungsschalter 1 auf der Oberseite eine Handhabe 11 zum mechanischen Betätigen des Leistungsschalters 1 aufweist. Ferner weist der abgebildete Leistungsschalter 1 eine Anschlusseinheit 4 auf. Über diese Anschlusseinheit 4 können Leistungsschalterzubehörmodule unmittelbar oder mittelbar über eine Einzelverdrahtung mit dem Leistungsschalter 1 verbunden werden. Die Anschlusseinheit 4 ist über eine Leistungsschalterkommunikationsleitung 9 elektrisch mit den Kommunikationskontaktelementen elektrisch leitend verbunden. Die Kommunikationskontaktelemente befinden sich auf der gegenüberliegenden Seite der Anschlusseinheit 4. Die Leistungsschalterkommunikationsleitung 9 ist hierbei innerhalb des Gehäuses des Leistungsschalters 1 angeordnet. Über ein Haltemittelgegenelement 10 kann der Leistungsschalter 1 mit einem Aufnahmemodul mechanisch gekoppelt werden.

FIG 5 zeigt eine perspektivische Ansicht der Unterseite des in FIG 4 gezeigten Leistungsschalters 1. Hierbei sind insbesondere die zur Kontaktierung mit einem Aufnahmemodul vorgesehenen Kontaktelemente ersichtlich. Der Leistungsschalter 1 weist zum elektrischen Verbinden mit einem Primärstromkreis einer zu überwachenden Anlage mehrere Primärstromkreiskontaktelemente 3 auf. Hierbei umfasst das Primärstromkreiskontaktelement 3 jeweils zwei in Längsrichtung gegenüberliegende Primärstromkreiskontaktelementkontaktstifte. Über die zwei Primärstromkreiskontaktelementkontaktstifte kann jeweils ein zu überwachender Strom durch den Leistungsschalter 1 geleitet und überwacht werden. Der Leistungsschalter überwacht somit drei Primärstromkreise. Zwischen jeweils einem Primärstromkreiskontaktelementkontaktstiftpaar ist ein Kommunikationskontaktelement 6 angeordnet. Dieses Kommunikationskontaktelement 6 ist mittig zwischen den beiden Primärstromkreiskontaktelementkontaktstiften angeordnet. Das Kommunikationskontaktelement 6 ist über eine Leistungsschalterkommunikationsleitung 9 elektrisch leitend mit der gegenüberliegenden Anschlusseinheit verbunden. Sofern an der Anschlusseinheit ein Leistungsschalterzubehörmodul angeschlossen ist, liegt eine elektrisch leitende Verbindung zwischen dem Leistungsschalterzubehörmodul und dem Kommunikationskontaktelement 6 vor. Über das Kommunikationskontaktelement 6 kann somit eine Kommunikation mit dem Leistungsschalterzubehörmodul erfolgen. Der hier abgebildete Leistungsschalter weist fünf Kommunikationskontaktelemente 6 auf. Ein Kommunikationskontaktelement besteht hierbei aus vier einzelnen Kommunikationskontaktstiften. Die Anzahl der Kommunikationskontaktstifte sowie der Kommunikationskontaktelemente 6 kann jedoch in Abhängigkeit des Leistungsschalters 1 variieren.

Der Leistungsschalter 1 kann über das Haltemittelgegenelement 10 mit einem Aufnahmemodul, welches sich vorzugsweise in einem Schaltschrank befindet, mechanisch sowie elektrisch gekoppelt werden. Hierbei werden erfindungsgemäß zunächst die Kommunikationskontaktelemente 6 elektrisch leitend mit dem Aufnahmemodul kontaktiert und anschließend die Primärstromkreiskontaktelemente 3 mit dem Aufnahmemodul kontaktiert. Bei diesem Koppelvorgang ist in einer ersten Aufnahmeposition des Leistungsschalters 1 ein elektrisches Kontaktieren der Kommunikationskontaktelemente 6 mit dem Aufnahmemodul bei gleichzeitiger sicherer galvanischer Trennung der Primärstromkreiskontaktelemente zum Aufnahmemodul gewährleistet.

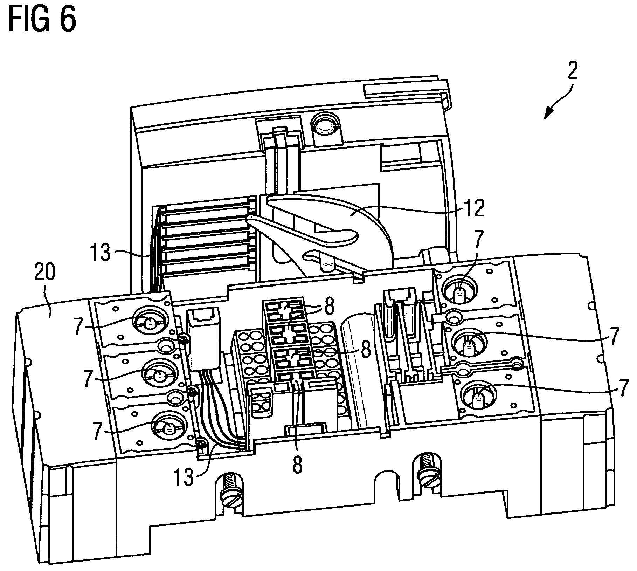

FIG 6 zeigt eine perspektivische Ansicht eines Aufnahmemoduls 2, welches zur Aufnahme eines Leistungsschalters ausgebildet ist. Das Aufnahmemodul 2 ist hierbei insbesondere derart dimensioniert, dass der unter FIG 4 und 5 abgebildete Leistungsschalter ausgenommen werden kann. Das abgebildete Aufnahmemodul 2 ist dazu ausgebildet, in einen Schaltschrank eingebaut zu werden. Ein Leistungsschalter wird letztendlich mit einem Teil der Oberseite 20 des Aufnahmemoduls 2 derart elektrisch sowie mechanisch gekoppelt, dass eine Verbindung zwischen Kommunikationsgegenkontaktelementen 8 und Primärstromkreisgegenkontaktelementen 7 mit den zugehörigen Kontaktelementen des Leistungsschalters 1 elektrisch leitend verbunden sind. Hierbei kann das Aufnahmemodul 2 mindestens zwei unterschiedliche Schaltstellungen / Aufnahmepositionen einnehmen. Das hier abgebildete Aufnahmemodul 2 ermöglicht drei unterschiedliche Schaltpositionen gegenüber einem zu koppelnden Leistungsschalter.

In einem ersten Koppelschritt wird der Leistungsschalter zunächst rein mechanisch mit dem Aufnahmemodul 2 verbunden, so dass eine erste Schaltposition des Leistungsschalters gegenüber dem Aufnahmemodul 2 eingenommen wird. In der ersten Schaltposition liegt keine elektrisch leitende Verbindung zwischen den Primärstromkreisgegenkontaktelementen 7 und den Primärstromkreiskontaktelementen des Leistungsschalters sowie zwischen den Kommunikationsgegenkontaktelementen 8 und den Kommunikationskontaktelementen des Leistungsschalters vor.

Wird nun in einem weiteren Koppelschritt der Leistungsschalter in Richtung der Oberseite 20 des Aufnahmemoduls 2 bewegt, so nimmt der Leistungsschalter gegenüber dem Aufnahmemodul 2 eine zweite Schaltposition (erste Aufnahmeposition des Leistungsschalters) ein. Hierbei sind lediglich die Kommunikationsgegenkontaktelemente 8 mit den zugehörigen Kommunikationskontaktelementen elektrisch leitend verbunden, so dass hierüber eine Kommunikation mit einem Leistungsschalterzubehörmodul, welches mit dem Leistungsschalter verbunden ist, erfolgen kann. Die Primärstromkreisgegenkontaktelemente 7 sind sicher von den Primärstromkreiskontaktelementen des Leistungsschalters beabstandet, so dass kein Stromfluss zwischen den beiden Kontakten erfolgen kann. Innerhalb dieser Schaltposition kann das mit dem Leistungsschalter gekoppelte Zubehörmodul getestet und oder parametriert werden. Eine vollständige Kommunikation mit dem Leistungsschalterzubehörmodul kann somit über das Aufnahmemodul 2 erfolgen. Die Kommunikationsgegenkontaktelemente 8 sind mittels einer Aufnahmemodulkommunikationsleitung 13 mit einer Auswerteeinheit elektrisch leitend verbunden. Die Auswerteeinheit kann somit bereits innerhalb dieser Schaltposition mit den Leistungsschalterzubehörmodulen kommunizieren. Diese Kommunikation kann einseitig oder auch zweiseitig ausgebildet sein. Die Auswerteeinheit 1 kann innerhalb des Aufnahmemoduls 2 integriert sein, es ist aber ebenso auch denkbar, dass eine extern angeordnete Auswerteeinheit mit dem Aufnahmemodul 2 verbunden ist, so dass eine Kommunikation über das Aufnahmemodul 2 mit den Leistungsschalterzubehörmodulen erfolgen kann. Die Aufnahmemodulkommunikationsleitungen 13 sind bereits werksseitig in dem Aufnahmemodul 2 integriert.

Erst in einem anschließenden dritten Koppelschritt wird die dritte Schaltposition (zweite Aufnahmeposition des Leistungsschalters) zwischen dem Leistungsschalter und dem Aufnahmemodul 2 eingenommen. Diese Schaltposition bildet die Arbeitsstellung des Leistungsschalters. Hierbei sind sowohl die Primärstromkreisgegenkontaktelemente 7 als auch die Kommunikationsgegenkontaktelemente 8 elektrisch leitend mit ihren zugehörigen Kontaktelementen des Leistungsschalters verbunden. Der zu überwachende Primärstromkreis wird somit durch das Aufnahmemodul 2 zu dem Leistungsschalter geleitet, so dass dieser über den Leistungsschalter geführt werden kann. Das Kommunikationsgegenkontaktelement 8 ist ab der zweiten Schaltstellung (erste Aufnahmeposition) bis einschließlich zur dritten Schaltposition (zweite Aufnahmeposition) elektrisch leitend mit den Kommunikationskontaktelementen des Leistungsschalters verbunden. Dadurch, dass die Kommunikationsgegenkontaktelemente 8 einen federnd gelagerten Teil aufweisen, kann das elektrische Kontaktieren zwischen der ersten Aufnahmeposition und der zweiten Aufnahmeposition sichergestellt werden. Ferner können hierdurch mechanische Beschädigungen der Kommunikationsgegenkontaktelemente 8 vermieden werden.

Über ein Haltemittel 12, kann der Koppelvorgang des Leistungsschalters mit dem Aufnahmemodul 2 gesteuert werden. Hierbei wirkt das Haltemittel 12 derart mit dem Haltemittelgegenelement des Leistungsschalters zusammen, dass über das Haltemittel 12 ein mechanisches Koppeln des Leistungsschalters mit dem Aufnahmemodul sichergestellt werden kann. Ferner kann über das Haltemittel 12 gezielt die jeweilige Schaltstellung/Aufnahmeposition angefahren werden. Ein Endanwender kann somit mittels des Aufnahmemoduls 2 gezielt die erwünschte Schaltstellung anfahren.

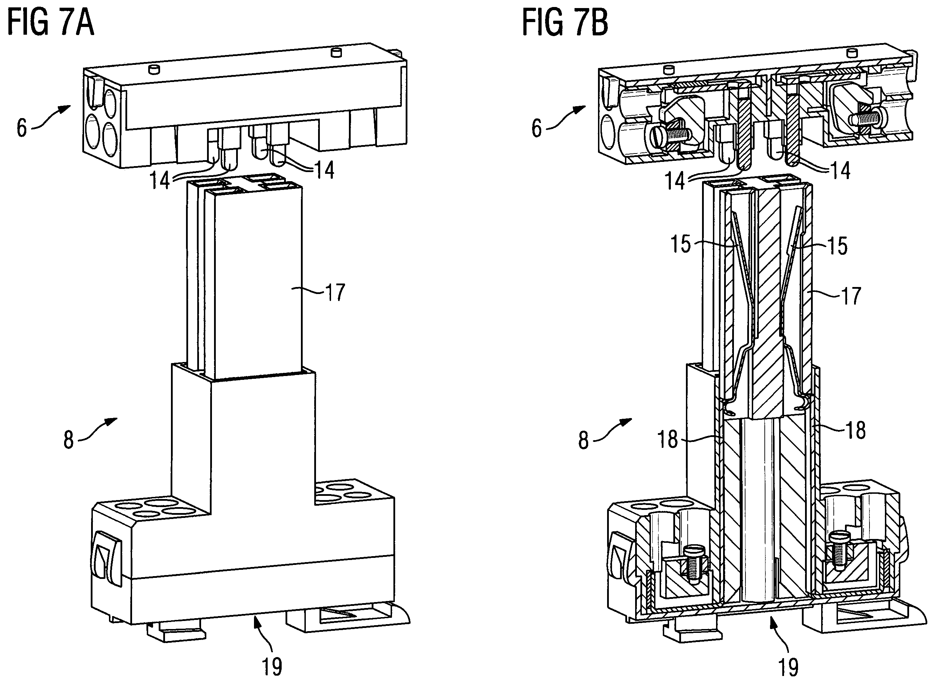

In den Figuren 7 bis 9 wird das Kommunikationskontaktelement 6 sowie das Kommunikationsgegenkontaktelement 8 näher dargestellt, sowie beschrieben. Es werden insbesondere die einzelnen Koppelschritte des Kommunikationskontaktelements 6 mit dem Kommunikationsgegenkontaktelement 8 dargestellt. Hierbei ist jeweils lediglich das Kommunikationskontaktelement 6 des Leistungsschalters der FIG 4, 5 sowie das zugehörige Kommunikationsgegenkontaktelement 8 des Aufnahmemoduls der FIG 6 abgebildet.

FIG 7a zeigt eine Anordnung des Kommunikationskontaktelements 6 gegenüber dem Kommunikationsgegenkontaktelement 8 in der ersten Schaltposition. FIG 7b zeigt ein Schnittbild der in FIG 7a abgebildeten Anordnung, so dass der innere Aufbau des Kommunikationskontaktelements 6 sowie des Kommunikationsgegenkontaktelements 8 ersichtlich ist.

Es ist ersichtlich, dass das Kommunikationskontaktelement 6 jeweils vier Kommunikationskontaktstifte 14 aufweist. Diese Kommunikationskontaktstifte 14 sind mechanisch fest innerhalb des Kommunikationskontaktelementes 6 befestigt und sind elektrisch leitend mit der Anschlusseinheit des Leistungsschalters verbunden. Ein mit dem Leistungsschalter gekoppeltes Leistungsschalterzubehörmodul ist elektrisch leitend mit diesen Kommunikationskontaktstiften 14 verbunden. Das Aufnahmemodul, welches zur Aufnahme des Leistungsschalters vorgesehen ist, weist das Kommunikationsgegenkontaktelement 8 auf. Dieses Kommunikationsgegenkontaktelement 8 besitzt ein federnd gelagertes Teil 17. Dieses federnd gelagerte Teil 17 kann in Richtung der zum Aufnahmemodul gerichteten Seite 19 bewegt werden. Dieses federnd gelagerte bewegliche Teil 17 weist je Kommunikationskontaktstift 14 ein Kommunikationsgegenkontaktkontaktelement 15 auf. Dieses Kommunikationsgegenkontaktkontaktelement 15 ist derart innerhalb des federnd gelagerten Teils 17 angeordnet, dass sofern die Kommunikationskontaktstifte 14 in das federnd gelagerte Teil 17 des Kommunikationsgegenkontaktelement 8 ragen, eine elektrisch leitende Verbindung zwischen den Kommunikationskontaktstift 14 und dem Kommunikationsgegenkontaktkontaktelement 15 hergestellt wird. Das Kommunikationsgegenkontaktkontaktelement 15 ist auf der zum Aufnahmemodul gerichteten Seite 19 jeweils mit einer Kontaktschiene 18 elektrisch leitend verbunden. Wird somit das federnd gelagerte Teil 17 in Richtung der zum Aufnahmemodul gerichteten Seite 19 bewegt, so wird über die Kontaktschiene 18 und dem zugehörigen Element des Kommunikationsgegenkontaktkontaktelements 15 sichergestellt, dass eine elektrische Verbindung zwischen den beiden Elementen vorliegt. Das federnd gelagerte Teil 17 ist mittels einer Feder derart innerhalb des Kommunikationsgegenkontaktelements 8 gelagert, dass das federnd gelagerte Teil 17 im unbelasteten Zustand möglichst weit von der zum Aufnahmemodul gerichteten Seite 19 beabstandet ist.

In dem durch FIG 7a und 7b abgebildeten Zustand des Kommunikationskontaktelements 6 gegenüber dem Kommunikationsgegenkontaktelement 8 ist der Leistungsschalter mit dem Aufnahmemodul lediglich mechanisch gekoppelt. Eine elektrisch leitende Verbindung liegt hierbei weder zwischen dem Kommunikationskontaktelement 6 und dem Kommunikationsgegenkontaktelement 8 noch zwischen dem Primärstromkreiskontaktelement 3 und dem Primärstromkreisgegenkontaktelement 7 vor.

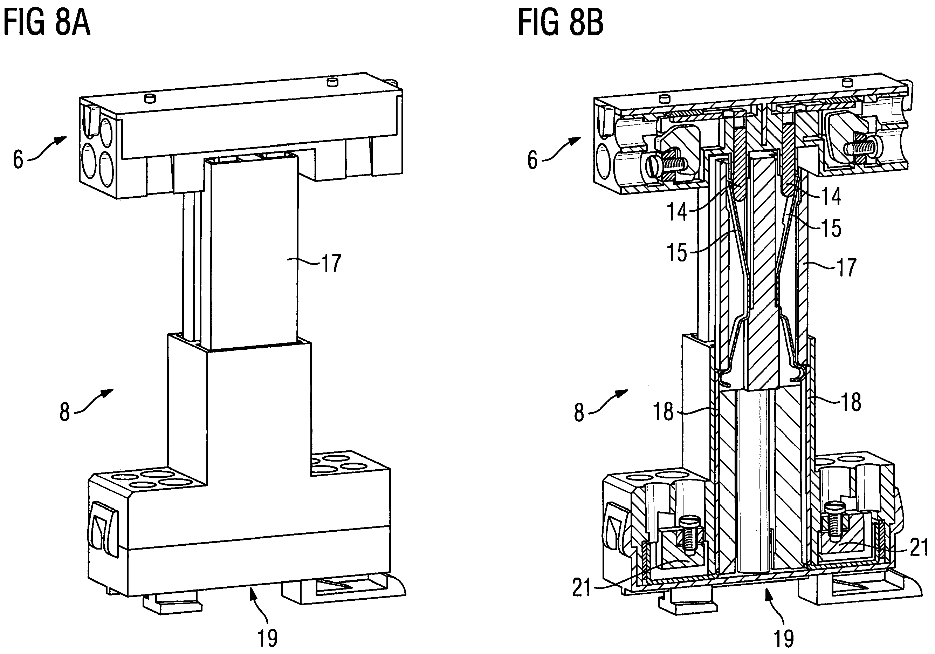

FIG 8a sowie FIG 8b zeigt eine Anordnung des Kommunikationskontaktelements 6 gegenüber dem Kommunikationsgegenkontaktelement 8 in der ersten Aufnahmeposition des Leistungsschalters in dem Aufnahmemodul. FIG 8b zeigt ein Schnittbild der in FIG 8a abgebildeten Anordnung. Es ist ersichtlich, dass jeweils der Kommunikationskontaktstift 14 das Kommunikationsgegenkontaktkontaktelement 15 elektrisch leitende kontaktiert. Das Kommunikationsgegenkontaktkontaktelement 15 ist innerhalb des federnd gelagerten Teils 17 des Kommunikationsgegenkontaktelements 8 angeordnet. Der nicht beweglich gelagerte Teil des Kommunikationsgegenkontaktkontaktelements 8 weist ein trichterförmiges Element auf, über welches die Führung des beweglich gelagerten Teils 17 ermöglicht wird. Ferner weist das trichterförmige Element Kontaktschienen 18 auf, welche eine elektrisch leitende Verbindung zwischen den Kommunikationsgegenkontaktkontaktelementen 15 und einem mit der Kontaktschiene 18 verbundenen Kabelanschlusselement 21 sicherstellen. Über dieses Kabelanschlusselement 21 kann eine weiterführende elektrisch leitende Verbindung des Kommunikationszweiges erfolgen. Dadurch, dass das Kommunikationsgegenkontaktkontaktelement 15 beweglich innerhalb des Kommunikationsgegenkontaktelements 8 gelagert ist, kann eine Kontaktierung mit den Kommunikationskontaktstiften 14 trotz räumlicher Änderung der Kommunikationskontaktstifte 14 gegenüber dem Aufnahmemodul sichergestellt werden. Das trichterförmige Elemente und/oder die Kontaktschienen 18 sind vorzugsweise orthogonal zur Seitenfläche 19 ausgerichtet.

In der durch Figur FIG 8a und 8b gezeigten Schaltstellung ist eine elektrisch leitende Verbindung zwischen dem Kommunikationskontaktelement 6 und dem Kommunikationsgegenkontaktelement 8 sichergestellt. Auf diese Weise kann über das Aufnahmemodul mit einem mit dem Leistungsschalter verbundenen Leistungsschalterzubehörmodul kommuniziert werden. Ferner kann die Energieversorgung des Leistungsschalterzubehörmoduls über diese Verbindung erfolgen. Das Primärstromkreiskontaktelement ist in dieser Schaltstellung nicht elektrisch leitend mit dem Primärstromkreisgegenkontaktelement verbunden. Eine derartige Schaltstellung zwischen dem Leistungsschalter und dem Aufnahmemodul kann insbesondere für Testzwecke oder zur Parametrierung der Leistungsschalterzubehörmodule genutzt werden.

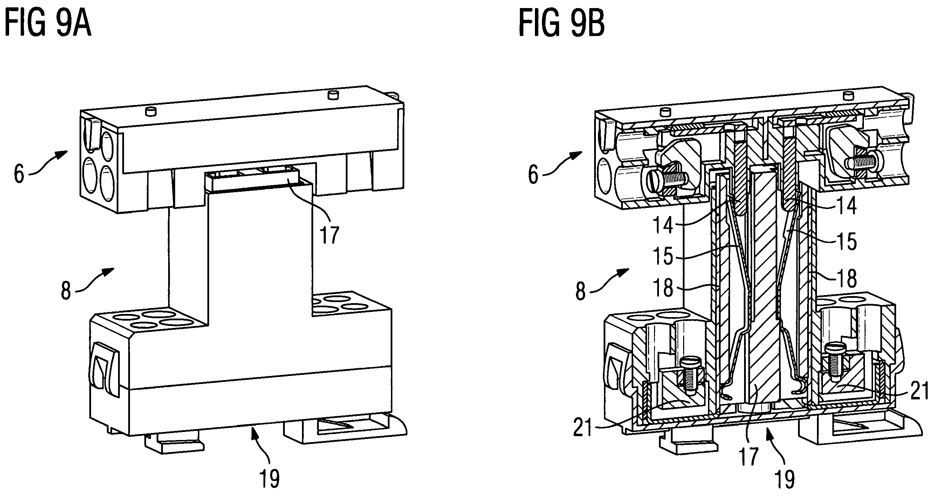

FIG 9a sowie 9b zeigen eine Anordnung des Kommunikationskontaktelements 6 gegenüber dem Kommunikationsgegenkontaktelement 8, in der zweiten Aufnahmeposition des Leistungsschalters in dem Aufnahmemodul. FIG 9b zeigt ein Schnittbild der in FIG 9a abgebildeten Anordnung. Es ist ersichtlich, dass das federnd gelagerte Teil 17 des Kommunikationsgegenkontaktelements 8 in den hülsenähnlichen Körper des Kommunikationsgegenkontaktelements 8 bewegt wurde. Die zum Kommunikationskontaktelement 6 gerichtete Seitenfläche des Kommunikationsgegenkontaktelements 8 ist somit im Vergleich zur FIG 8 geringer von der zum Aufnahmemodul gerichteten Seitenfläche 19 des Kommunikationsgegenkontaktelements 8 beabstandet. Damit die zweite Aufnahmeposition herbeigeführt wird, muss der Leistungsschalter weiter in Richtung des Aufnahmemoduls bewegt werden. Hierbei wird der beweglich gelagerte Teil 17 des Kommunikationsgegenkontaktelements 8 in Richtung der Seitenfläche 19 bewegt. Durch die Kontaktschiene 18 und das Kommunikationsgegenkontaktkontaktelement 15 wird sichergestellt, dass die elektrisch leitende Verbindung zwischen den Kommunikationskontaktstiften 14 und den Kommunikationsgegenkontaktelementen 15 zum Aufnahmemodul beständig aufrechterhalten wird. Das Kommunikationsgegenkontaktkontaktelement 15 gleitet an der Kontaktschiene 18 bei einer Bewegung in Richtung der Seitenfläche 19 entlang. Hierbei wird von dem Kommunikationsgegenkontaktkontaktelement 15 eine Kraft in Richtung der Kontaktschiene 18 ausgeübt, so dass eine beständige elektrische Kontaktierung sichergestellt wird. Hierbei ist das Kommunikationsgegenkontaktkontaktelement 15 derart innerhalb des federnd gelagerten Teils 17 angeordnet, dass das Kommunikationsgegenkontaktkontaktelement 15 zum Einen eine mechanische Druckkraft auf die Kontaktschiene 18 als auch eine Druckkraft auf den Kommunikationskontaktstift 14 ausübt. Über die Kontaktschiene 18 wird eine elektrisch leitende Verbindung zum Aufnahmemodul sichergestellt. Eine mit der Kontaktschiene 18 bzw. dem Kabelanschlusselement 21 mittelbar verbundene Auswerteeinheit kann somit mit einem Leistungsschalterzubehörmodul kommunizieren, ohne dass eine separate Einzelverdrahtung zu dem Leistungsschalterzubehörmodul erforderlich ist. Innerhalb dieser Schaltposition bzw. in der zweiten Aufnahmeposition des Leistungsschalters in dem Aufnahmemodul ist das Primärstromkreiskontaktelement des Leistungsschalters mit dem Primärstromkreisgegenkontaktelement des Aufnahmemoduls elektrisch leitend verbunden, so dass der Leistungsschalter mindestens einen Primärstromkreis überwachen kann.

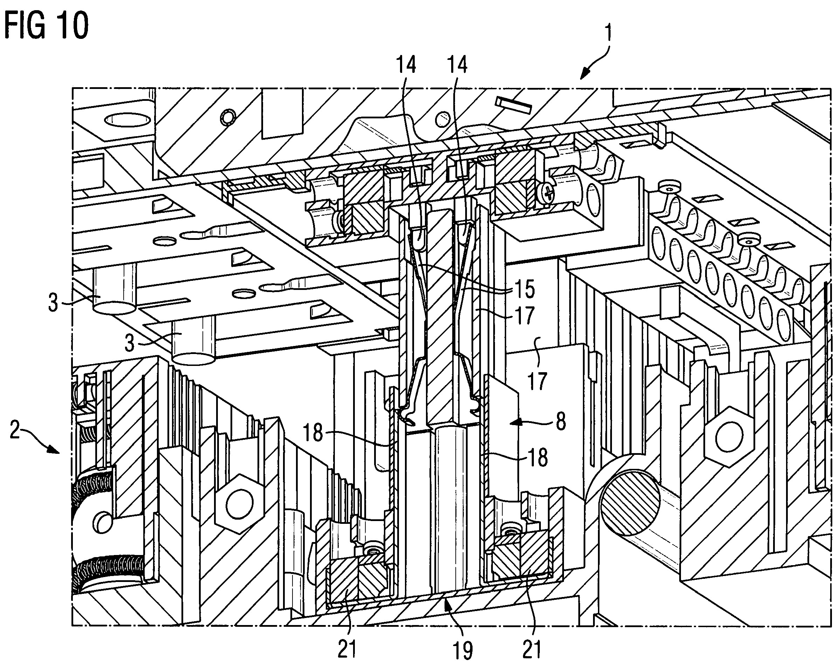

FIG 10 zeigt eine perspektivische Darstellung eines Ausschnitts eines Leistungsschalters 1 gegenüber einem Ausschnitt eines Aufnahmemoduls 2 in der ersten Aufnahmeposition. Das in Figur 7 bis 9 gezeigten Kommunikationskontaktelement sowie Kommunikationsgegenkontaktelement 8 ist in dem Leistungsschalter 1 bzw. dem Aufnahmemodul 2 verbaut. Hierbei sind ein Kommunikationskontaktelement und ein Kommunikationsgegenkontaktelement 8 im Schnitt abgebildet, so dass ein Teil deren Kontakte ersichtlich sind. Es ist ersichtlich, dass die Kommunikationskontaktstifte 14 die Kommunikationsgegenkontaktkontaktelemente 15 elektrisch leitend kontaktieren. Die Kommunikationsgegenkontaktkontaktelemente 15, welche innerhalb des federnd gelagerten Teils 17 des Kommunikationsgegenkontaktelements 8 gelagert sind, kontaktieren über die zum Aufnahmemodul gerichtete Seite die Kontaktschiene 18. Die Kontaktschiene 18 ist an der zum Aufnahmemodul 2 gerichteten Seitenfläche 19 jeweils mit einem Kabelanschlusselement 21 elektrisch leitend verbunden, so dass eine mit diesem Kabelanschlusselement 21 elektrisch leitend verbundene Auswerteeinheit mit einem Leistungsschalterzubehörmodul kommunizieren kann.

Es ist ersichtlich, dass die Primärstromkreiskontaktelemente 3 des Leistungsschalters 1 nicht elektrisch leitend mit dem Aufnahmemodul 2 verbunden sind. Die Primärstromkreiskontaktelemente 3 sind somit galvanisch von dem Aufnahmemodul 2 getrennt. Innerhalb dieser Schaltposition (erste Aufnahmeposition) kann insbesondere eine Parametrierung und/oder Diagnose eines Leistungsschalterzubehörmoduls über das Aufnahmemodul 2 erfolgen.

## Patentansprüche

1. Aufnahmemodul (2), zum Einbau in einen Schaltschrank, mit einem Primärstromkreisgegenkontaktelement (7) und einem Kommunikationsgegenkontaktelement (8), wobei das Aufnahmemodul (2) einen Leistungsschalter (1) unmittelbar aufnehmen kann, so dass ein Primärstromkreiskontaktelement (3) des Leistungsschalters (1) unmittelbar mit dem Primärstromkreisgegenkontaktelement (7) und ein Kommunikationskontaktelement (6) des Leistungsschalters (1) unmittelbar mit dem Kommunikationsgegenkontaktelement (8) elektrisch leitend verbunden sind, wobei das Kommunikationsgegenkontaktelement (8) gegenüber dem Primärstromkreisgegenkontaktelement (7) derart angeordnet ist, dass in einer ersten Aufnahmeposition des Leistungsschalters (1) in dem Aufnahmemodul (2) das Kommunikationskontaktelement (6) mit dem Kommunikationsgegenkontaktelement (8) elektrische leitend verbunden ist und das Primärstromkreisgegenkontaktelement (7) nicht mit dem Primärstromkreiskontaktelement (3) elektrisch leitend verbunden ist und in einer zweiten Aufnahmeposition des Leistungsschalters (1) in dem Aufnahmemodul (2) das Primärstromkreisgegenkontaktelement (7) mit dem Primärstromkreiskontaktelement (3) und das Kommunikationsgegenkontaktelement (8) mit dem Kommunikationskontaktelement (6) elektrisch leitend verbunden sind, und **dadurch gekennzeichnet, dass** das Kommunikationsgegenkontaktelement (8) aus einem elektrisch leitenden Material sowie einem elektrisch schlecht leitenden Material besteht, wobei ein Teil des elektrisch schlecht leitenden Materials eine hülsenähnliche Form aufweist, in welcher ein Teil (17) des elektrisch leitenden Materials angeordnet ist.

2. Aufnahmemodul (2) nach Anspruch 1, wobei dass sich die hülsenähnliche Form des Kommunikationsgegenkontaktelements (8) in orthogonale Richtung zu der Seitenfläche des Aufnahmemoduls (2), aus welcher das Kommunikationsgegenkontaktelement (8) ragt, erstreckt.

3. Aufnahmemodul (2) nach einem der vorhergehenden Ansprüche, wobei das Kommunikationsgegenkontaktelement (8) eine teleskopähnliche Form aufweist.

4. Aufnahmemodul (2) nach einem der vorhergehenden Ansprüche, wobei eine Feder derart in dem Kommunikationsgegenkontaktelement (8) integriert ist, dass sofern keine mechanische Belastung an dem Kommunikationsgegenkontaktelement (8) anliegt, das Kommunikationsgegenkontaktelement (8) eine maximale Beabstandung zur Seitenfläche einnimmt.

5. Aufnahmemodul (2) nach einem der vorhergehenden Ansprüche, wobei ein Teil (17) des Kommunikationsgegenkontaktelements (8) im Wesentlichen in orthogonale Richtung zu der Seitenfläche des Aufnahmemoduls (2), aus welcher das Kommunikationsgegenkontaktelement (8) ragt, federnd gelagert ist.

6. Aufnahmemodul (2) nach Anspruch 5, wobei in der ersten Aufnahmeposition das federnd gelagerte Teil (17) weiter von der Seitenfläche des Aufnahmemoduls (2) beabstandet ist als in der zweiten Aufnahmeposition.

7. Aufnahmemodul (2) nach einem der Ansprüche 5 bis 6, wobei das federnd gelagerte Teil (17) innerhalb des Kommunikationsgegenkontaktelements (8) gelagert ist.

8. Aufnahmemodul (2) nach einem der vorhergehenden Ansprüche, wobei das Kommunikationsgegenkontaktelement (8) ein innerhalb eines elektrisch schlecht leitenden Materials federnd gelagertes elektrisch leitendes Kommunikationsgegenkontaktkontaktelement (15), zur unmittelbaren Kontaktierung mit dem Kommunikationskontaktelement (6), umfasst, wobei das Kommunikationsgegenkontaktkontaktelement (15) über eine an einer Innenseite eines schlecht leitenden Materials angeordnete elektrisch leitende Kontaktschiene (18) eine elektrisch leitend Verbindung zwischen dem Kommunikationsgegenkontaktkontaktelement (15) und der Seitenfläche (19) des Kommunikationsgegenkontaktelements (8) herstellt, mit welcher das Kommunikationsgegenkontaktelement (8) mit dem Aufnahmemodul (2) befestigt ist.

9. Aufnahmemodul (2) nach einem der vorhergehenden Ansprüche, wobei das Kommunikationsgegenkontaktelement (8) und das Primärstromkreisgegenkontaktelement (7) auf einer gleichen Seitenfläche des Aufnahmemoduls (2) angeordnet sind.

10. Aufnahmemodul (2) nach einem der vorhergehenden Ansprüche,
wobei das Aufnahmemodul (2) ein Haltemittel (12) umfasst, welches den Leistungsschalter (1) in der ersten Aufnahmeposition und in der zweiten Aufnahmeposition mechanisch fixieren kann.

11. Aufnahmemodul (2) nach einem der vorhergehenden Ansprüche, wobei über das Haltemittel (12) der Leistungsschalter (1) die erste und die zweite Aufnahmeposition gezielt einnehmen kann.

12. Leistungsschaltersystem umfassend einen Leistungsschalter (1) und ein Aufnahmemodul (2) nach einem der Ansprüche 1 bis 11, zum Aufnehmen des Leistungsschalters (1), wobei der Leistungsschalter (1) ein Primärstromkreiskontaktelement (3) und ein Kommunikationskontaktelement (6) und das Aufnahmemodul (2) ein Primärstromkreisgegenkontaktelement (7) und ein Kommunikationsgegenkontaktelement (8) umfasst, wobei das Aufnahmemodul (2) den Leistungsschalter (1) unmittelbar aufnehmen kann, so dass das Primärstromkreiskontaktelement (3) unmittelbar mit dem Primärstromkreisgegenkontaktelement (7) und das Kommunikationskontaktelement (6) unmittelbar mit dem Kommunikationsgegenkontaktelement (8) elektrisch leitend verbunden sind, wobei das Kommunikationskontaktelement (3) und/oder Kommunikationsgegenkontaktelement (8) gegenüber dem Primärstromkreiskontaktelement (3) und/oder Primärstromkreisgegenkontaktelement (7) derart angeordnet sind, dass in einer ersten Aufnahmeposition des Leistungsschalters (1) in dem Aufnahmemodul (2) das Kommunikationskontaktelement (6) mit dem Kommunikationsgegenkontaktelement (8) elektrische leitend verbunden ist und das Primärstromkreisgegenkontaktelement (7) nicht mit dem Primärstromkreiskontaktelement (3) elektrisch leitend verbunden ist und in einer zweiten Aufnahmeposition des Leistungsschalters (1) in dem Aufnahmemodul (2) das Primärstromkreisgegenkontaktelement (7) mit dem Primärstromkreiskontaktelement (3) und das Kommunikationsgegenkontaktelement (8) mit dem Kommunikationskontaktelement (6) elektrisch leitend verbunden sind.

13. Leistungsschaltersystem nach Anspruch 12, wobei der Leistungsschalter (1) eine Anschlusseinheit (4), zum elektrischen Anschließen eines Leistungsschalterzubehörmoduls umfasst, wobei zumindest ein Teil der Anschlusseinheit (4) mit dem Kommunikationskontaktelement (6) elektrische leitend verbunden ist.

14. Verfahren zum Koppeln eines Leistungsschalters (1) mit einem Aufnahmemodul (2), wobei der Leistungsschalter (1) ein Primärstromkreiskontaktelement (3) und ein Kommunikationskontaktelement (6) und das Aufnahmemodul (2) ein Primärstromkreisgegenkontaktelement (7) und ein Kommunikationsgegenkontaktelement (8) umfasst, wobei beim mechanischen Koppeln des Leistungsschalters (1) mit dem Aufnahmemodul (2) in einem ersten Koppelschritt des Leistungsschalters (1) mit dem Aufnahmemodul (2) der Leistungsschalter (1) in dem Aufnahmemodul (2) zunächst eine erste Aufnahmeposition einnimmt, in welcher das Kommunikationskontaktelement (6) mit dem Kommunikationsgegenkontaktelement (8) elektrische leitend verbunden ist und das Primärstromkreisgegenkontaktelement (7) nicht mit dem Primärstromkreiskontaktelement (3) elektrisch leitend verbunden ist und in einem anschließenden zweiten Koppelschritt des Leistungsschalters (1) mit dem Aufnahmemodul (2) der Leistungsschalter (1) in dem Aufnahmemodul (2) eine zweiten Aufnahmeposition einnimmt, in welcher das Primärstromkreisgegenkontaktelement (7) mit dem Primärstromkreiskontaktelement (3) und das Kommunikationsgegenkontaktelement (8) mit dem Kommunikationskontaktelement (6) elektrisch leitend verbunden ist, wobei ein Leistungsschaltersystem nach einem der Ansprüche 12 bis 13 verwendet wird.

15. Verfahren zum Koppeln eines Leistungsschalters (1) mit einem Aufnahmemodul (2) nach Anspruch 12, wobei der Leistungsschalter (1) vom Aufnahmemodul (2) in der ersten sowie der zweiten Aufnahmeposition mechanisch von dem Aufnahmemodul (2) gehalten wird.

16. Verfahren zum Koppeln eines Leistungsschalters (1) mit einem Aufnahmemodul (2) nach einem der Ansprüche 14 bis 15, wobei ab dem ersten Koppelschritt bis einschließlich zum zweiten Koppelschritt die elektrisch leitende Verbindung zwischen dem Kommunikationskontaktelement (6) und dem Kommunikationsgegenkontaktelement (8) hergestellt ist.

## Claims

1. Receiving module (2) for building into a switching cabinet, with a primary circuit mating contact element (7) and a communication mating contact element (8), wherein the receiving module (2) can directly receive a power switch (1) so that a primary circuit contact element (3) of the power switch (1) is directly electrically-conductively connected to the primary circuit mating contact element (7) and a communication contact element (6) of the power switch (1) is directly electrically-conductively connected to the communication mating contact element (8), wherein the communication mating contact element (8) is arranged in relation to the primary circuit mating contact element (7) such that, in a first receiving position of the power switch (1) in the receiving module (2) the communication contact element (6) is electrically-conductively connected to the communication mating contact element (8) and the primary circuit mating contact element (7) is not electrically-conductively connected to the primary circuit contact element (3) and in a second receiving position of the power switch (1) in the receiving module (2) the primary circuit mating contact element (7) is electrically-conductively connected to the primary circuit contact element (3) and the communication mating contact element (8) is electrically-conductively connected to the communication contact element (6), and **characterised in that** the communication mating contact element (8) consists of an electrically-conducting material as well as a poorly electrically-conducting material, wherein a part of the poorly electrically-conducting material has a sleeve-like form in which a part (17) of the electrically-conducting material is arranged.

2. Receiving module (2) according to claim 1, wherein the sleeve-like form of the communication mating contact element (8) extends in the orthogonal direction towards the side surface of the receiving module (2) from which the communication mating contact element (8) protrudes.

3. Receiving module (2) according to one of the preceding claims, wherein the communication mating contact element (8) has a shape similar to that of the telescope.

4. Receiving module (2) according to one of the preceding claims, wherein a spring is integrated in the communication mating contact element (8) such that, provided there is no mechanical strain on the communication mating contact element (8), the communication mating contact element (8) assumes a maximum distance from the side surface.

5. Receiving module (2) according to one of the preceding claims,
wherein a part (17) of the communication mating contact element (8) is essentially sprung-supported in the orthogonal direction to the side surface of the receiving module (2), from which the communication mating contact element (8) protrudes.

6. Receiving module (2) according to claim 5, wherein in the first receiving position the sprung-supported part (17) is spaced further away from the side surface of the receiving module (2) than it is in the second receiving position.

7. Receiving module (2) according to one of claims 5 to 6, wherein the sprung-supported part (17) is supported within the communication mating contact element (8).

8. Receiving module (2) according to one of the preceding claims, wherein the communication mating contact element (8) comprises an electrically-conductive communication mating contact contact element (15) sprung supported within a material that is a poor electrical conductor, for direct contact with the communication contact element (6), wherein the communication mating contact contact element (15) establishes an electrically-conductive connection between the communication mating contact contact element (15) and the side surface (19) of the communication mating contact element (8) via an electrically-conductive contact rail (18) arranged on an inner side of a material which is a poor electrical conductor, with which the communication mating contact element (8) is fastened to the receiving module (2).

9. Receiving module (2) according to one of the preceding claims, wherein the communication mating contact element (8) and the primary circuit mating contact element (7) are arranged on the same side surface of the receiving module (2).

10. Receiving module (2) according to one of the preceding claims,
wherein the receiving module (2) comprises a holder (12) which can fix the power switch (1) mechanically in the first receiving position and in the second receiving position.

11. Receiving module (2) according to one of the preceding claims, wherein the power switch (1) can explicitly assume the first and the second receiving position via the holder (12).

12. Power switch system comprising a power switch (1) and a receiving module (2) according to one of claims 1 to 11, for receiving the power switch (1), wherein the power switch (1) comprises a primary circuit contact element (3) and a communication contact element (6) and the receiving module (2) comprises a primary circuit mating contact element (7) and a communication mating contact element (8), wherein the receiving module (2) can directly receive the power switch (1), so that the primary circuit contact element (3) is connected electrically-conductively directly to the primary circuit mating contact element (7) and the communication contact element (6) is connected electrically-conductively directly to the communication mating contact element (8), wherein the communication contact element (3) and/or communication mating contact element (8) are arranged in relation to the primary circuit contact element (3) and/or primary circuit mating contact element (7) such that, in a first receiving position of the power switch (1) in the receiving module (2) the communication contact element (6) is connected electrically-conductively to the communication mating contact element (8) and the primary circuit mating contact element (7) is not connected electrically-conductively to the primary circuit contact element (3) and in a second receiving position of the power switch (1) in the receiving module (2) the primary circuit mating contact element (7) is connected electrically-conductively to the primary circuit contact element (3) and the communication mating contact element (8) is connected electrically-conductively to the communication contact element (6).

13. Power switch system according to claim 12, wherein the power switch (1) includes a connection unit (4) for electrical connection of a power switch accessory module, wherein at least one part of the connection unit (4) is connected electrically-conductively to the communication contact element (6).

14. Method for coupling a power switch (1) to a receiving module (2), wherein the power switch (1) comprises a primary circuit contact element (3) and a communication contact element (6) and the receiving module (2) a primary circuit mating contact element (7) and a communication mating contact element (8), wherein, for mechanical coupling of the power switch (1) to the receiving module (2), in a first stage of coupling the power switch (1) to the receiving module (2) the power switch (1) first assumes a first receiving position in the receiving module (2), in which the communication contact element (6) is connected electrically-conductively to the communication mating contact element (8) and the primary circuit mating contact element (7) is not connected electrically-conductively to the primary circuit contact element (3) and in a subsequent second coupling step of the power switch (1) to the receiving module (2) the power switch (1) assumes a second receiving position in the receiving module (2) in which the primary circuit mating contact element (7) is connected electrically-conductively to the primary circuit contact element (3) and the communication mating contact element (8) is connected electrically-conductively to the communication contact element (6), wherein a power switch system according to one of claims 12 to 13 is used.

15. Method for coupling a power switch (1) to a receiving module (2) according to claim 12, wherein the power switch (1) is held mechanically by the receiving module (2) in the first and also the second receiving position.

16. Method for coupling a power switch (1) to a receiving module (2) according to one of claims 14 to 15, wherein, from the first stage of coupling up to and including the second stage of coupling the electrically-conductive connection is established between the communication contact element (6) and the communication mating contact element (8).

## Revendications

1. Module de réception (2), pour une installation dans une armoire de distribution, avec un élément de contre-contact de circuit électrique primaire (7) et un élément de contre-contact de communication (8), dans lequel le module de réception (2) peut recevoir directement un disjoncteur (1), de sorte qu'un élément de contact de circuit électrique primaire (3) du disjoncteur (1) est relié de manière électriquement conductrice directement avec l'élément de contre-contact de circuit électrique primaire (7) et un élément de contact de communication (6) du disjoncteur (1) est relié de manière électriquement conductrice avec l'élément de contre-contact de communication (8), dans lequel l'élément de contre-contact de communication (8) est disposé à l'opposé de l'élément de contre-contact de circuit électrique primaire (7) de telle sorte que dans une première position de réception du disjoncteur (1) dans le module de réception (2) l'élément de contact de communication (6) est relié de manière électriquement conductrice avec l'élément de contre-contact de communication (8) et l'élément de contre-contact de circuit électrique primaire (7) n'est pas relié de manière électriquement conductrice avec l'élément de contact de circuit électrique primaire (3) et dans une deuxième position de réception du disjoncteur (1) dans le module de réception (2) l'élément de contre-contact de circuit électrique primaire (7) est relié de manière électriquement conductrice avec l'élément de contact de circuit électrique primaire (3) et l'élément de contre-contact de communication (8) est relié de manière électriquement conductrice avec l'élément de contact de communication (6), **caractérisé en ce que** l'élément de contre-contact de communication (8) se compose d'un matériau électriquement conducteur ainsi que d'un matériau électriquement mauvais conducteur, dans lequel une partie du matériau électriquement mauvais conducteur présente une forme similaire à une douille, dans laquelle une partie (17) du matériau électriquement conducteur est disposée.

2. Module de réception (2) selon la revendication 1, dans lequel la forme similaire à une douille de l'élément de contre-contact de communication (8) s'étend dans la direction orthogonale par rapport à la face latérale du module de réception (2), d'où l'élément de contre-contact de communication (8) fait saillie.

3. Module de réception (2) selon l'une des revendications précédentes, dans lequel l'élément de contre-contact de communication (8) présente une forme similaire à un télescope.

4. Module de réception (2) selon l'une des revendications précédentes, dans lequel un ressort est intégré dans l'élément de contre-contact de communication (8), de sorte que dans la mesure où il n'y a aucune charge mécanique au niveau de l'élément de contre-contact de communication (8), l'élément de contre-contact de communication (8) prend un espacement maximal par rapport à la face latérale.

5. Module de réception (2) selon l'une des revendications précédentes, dans lequel une partie (17) de l'élément de contre-contact de communication (8) est montée avec un effet ressort pour l'essentiel dans la direction orthogonale par rapport à la face latérale du module de réception (2), d'où l'élément de contre-contact de communication (8) fait saillie.

6. Module de réception (2) selon la revendication 5, dans lequel dans la première position de réception la partie montée avec un effet ressort (17) est davantage espacée de la face latérale du module de réception (2) que dans la deuxième position de réception.

7. Module de réception (2) selon l'une des revendications 5 à 6, dans lequel la partie montée avec un effet ressort (17) est montée à l'intérieur de l'élément de contre-contact de communication (8).

8. Module de réception (2) selon l'une des revendications précédentes, dans lequel l'élément de contre-contact de communication (8) comprend un élément de contact de contre-contact de communication (15) électriquement conducteur monté avec un effet ressort à l'intérieur d'un matériau électriquement mauvais conducteur, pour la mise en contact directe avec l'élément de contact de communication (6), dans lequel l'élément de contact de contre-contact de communication (15) établit via un rail de contact électriquement conducteur (18) disposé au niveau d'un côté interne d'un matériau mauvais conducteur une connexion électriquement conductrice entre l'élément de contact de contre-contact de communication (15) et la face latérale (19) de l'élément de contre-contact de communication (8), avec laquelle l'élément de contre-contact de communication (8) est fixé au module de réception (2).

9. Module de réception (2) selon l'une des revendications précédentes, dans lequel l'élément de contre-contact de communication (8) et l'élément de contre-contact de circuit électrique primaire (7) sont disposés sur une même face latérale du module de réception (2).

10. Module de réception (2) selon l'une des revendications précédentes, dans lequel le module de réception (2) comprend un moyen de retenue (12), lequel peut fixer mécaniquement le disjoncteur (1) dans la première position de réception et dans la deuxième position de réception.

11. Module de réception (2) selon l'une des revendications précédentes, dans lequel via le moyen de retenue (12) le disjoncteur (1) peut prendre de manière ciblée la première et la deuxième position de réception.

12. Système disjoncteur comprenant un disjoncteur (1) et un module de réception (2) selon l'une des revendications 1 à 11, pour la réception du disjoncteur (1), dans lequel le disjoncteur (1) comprend un élément de contact de circuit électrique primaire (3) et un élément de contact de communication (6) et le module de réception (2) comprend un élément de contre-contact de circuit électrique primaire (7) et un élément de contre-contact de communication (8), dans lequel le module de réception (2) peut recevoir directement le disjoncteur (1), de sorte que l'élément de contact de circuit électrique primaire (3) est relié de manière électriquement conductrice directement avec l'élément de contre-contact de circuit électrique primaire (7) et l'élément de contact de communication (6) est relié de manière électriquement conductrice directement avec l'élément de contre-contact de communication (8), dans lequel l'élément de contact de communication (3) et/ou l'élément de contre-contact de communication (8) sont disposés par rapport à l'élément de contact de circuit électrique primaire (3) et/ou à l'élément de contre-contact de circuit électrique primaire (7) de telle sorte que dans une première position de réception du disjoncteur (1) dans le module de réception (2) l'élément de contact de communication (6) est relié de manière électriquement conductrice avec l'élément de contre-contact de communication (8) et l'élément de contre-contact de circuit électrique primaire (7) n'est pas relié de manière électriquement conductrice avec l'élément de contact de circuit électrique primaire (3) et dans une deuxième position de réception du disjoncteur (1) dans le module de réception (2) l'élément de contre-contact de circuit électrique primaire (7) est reliée de manière électriquement conductrice avec l'élément de contact de circuit primaire (3) et l'élément de contre-contact de communication (8) est relié de manière électriquement conductrice avec l'élément de contact de communication (6).

13. Système disjoncteur selon la revendication 12, dans lequel le disjoncteur (1) comprend une unité de raccordement (4), pour le raccordement électrique d'un module accessoire de disjoncteur, dans lequel une partie de l'unité de raccordement (4) est reliée de manière électriquement conductrice avec l'élément de contact de communication (6).

14. Procédé de couplage d'un disjoncteur (1) avec un module de réception (2), dans lequel le disjoncteur (1) comprend un élément de contact de circuit électrique primaire (3) et un élément de contact de communication (6) et le module de réception (2) comprend un élément de contre-contact de circuit électrique primaire (7) et un élément de contre-contact de communication (8), dans lequel lors du couplage mécanique du disjoncteur (1) avec le module de réception (2) lors d'une première étape de couplage du disjoncteur (1) avec le module de réception (2) le disjoncteur (1) prend dans le module de réception (2) d'abord une première position de réception, dans laquelle l'élément de contact de communication (6) est relié de manière électriquement conductrice avec l'élément de contre-contact de communication (8) et l'élément de contre-contact de circuit électrique primaire (7) n'est pas relié de manière électriquement conductrice avec l'élément de contact de circuit électrique primaire (3) et lors d'une deuxième étape de couplage consécutive du disjoncteur (1) avec le module de réception (2) le disjoncteur (1) prend dans le module de réception (2) une deuxième position de réception, dans laquelle l'élément de contre-contact de circuit électrique primaire (7) est relié de manière électriquement conductrice avec l'élément de contact de circuit électrique primaire (3) et l'élément de contre-contact de communication (8) est relié de manière électriquement conductrice avec l'élément de contact de communication (6), dans lequel un système disjoncteur selon l'une des revendications 12 à 13 est utilisé.

15. Procédé de couplage d'un disjoncteur (1) avec un module de réception (2) selon la revendication 12, dans lequel le disjoncteur (1) du module de réception (2) est dans la première ainsi que dans la deuxième position de réception retenu mécaniquement par le module de réception (2).

16. Procédé de couplage d'un disjoncteur (1) avec un module de réception (2) selon l'une des revendications 14 à 15, dans lequel de la première étape de couplage jusqu'à la deuxième étape de couplage incluse la connexion électriquement conductrice entre l'élément de contact de communication (6) et l'élément de contre-contact de communication (8) est établi.
